# FASCICULE DE BREVET EUROPEEN

(11) **EP 3 423 905 B1**
(45) Date de publication et mention de la délivrance du brevet: **01.04.2020**
(21) Numéro de dépôt: 17713722.1
(22) Date de dépôt: 28.02.2017
(51) Int. Cl.: G05B 15/02, H05B 37/02, G08C 17/02, H04L 12/28

(54) **PROCÉDÉ DE PILOTAGE D'UNE INSTALLATION DOMOTIQUE**
VERFAHREN ZUR STEUERUNG EINER HEIMAUTOMATIONSANLAGE
METHOD FOR CONTROLLING A HOME AUTOMATION INSTALLATION

(30) Priorité: 01.03.2016 FR 1651708
(43) Date de publication de la demande: 09.01.2019
(73) Titulaire: HAGER CONTROLS (Société par Actions Simplifiée), 67700 Saverne (FR)
(72) Inventeur: RIFF, Olivier, 67700 Saverne (FR); AKAKPO, Aurélien, 67370 Griesheim sur Souffel (FR); ELOI, Sébastien, 57820 Henridorff (FR)
(74) Mandataire: Cabinet Nuss
(86) Numéro de dépôt international: PCT/FR2017/050444
(87) Numéro de publication internationale: WO 2017/149236

(56) Documents cités:
- EP-A1- 2 899 826
- WO-A2-2009/029960
- US-B1- 6 169 377

## Description

La présente invention concerne le domaine des installations domotiques, plus particulièrement le domaine des installations domotiques pour éclairage pilotées à partir d'interrupteurs monostables et/ou bistables.

La présente invention a pour objet un procédé de pilotage d'une installation domotique.

Elle concerne en outre, un dispositif émetteur convenant à la mise en œuvre dudit procédé de pilotage.

Dans le présent document, un interrupteur monostable désigne un interrupteur de type bouton poussoir et un interrupteur bistable désigne un interrupteur à bascule ou à levier.

Dans le domaine des installations domotiques du bâtiment ou de l'habitat, on connait déjà des interrupteurs reliés électriquement à des télérupteurs en vue de commander des consommateurs électriques de type lampe ou chauffage électrique reliés électriquement à ces télérupteurs. De tels télérupteurs sont par exemple connus des documents EP 2 899 826 A1 et WO 2009/029960 A2.

Dans une installation standard, ces télérupteurs sont souvent reliés électriquement entre des interrupteurs et des consommateurs électriques à commander. Ainsi, selon la configuration souhaitée, il est possible de commander un ou plusieurs consommateurs électriques à partir d'un ou des plusieurs interrupteurs.

Dans une autre configuration d'une installation domotique, il est possible d'utiliser des télérupteurs radiocommandés. Pour cela, on relie électriquement un interrupteur installé dans une pièce à un tel télérupteur installé dans un coffret de distribution électrique du bâtiment ou de l'habitat. D'autre part, les consommateurs électriques à commander depuis l'interrupteur sont reliés électriquement à des récepteurs. Le télérupteur radiocommandé est alors utilisé comme émetteur pour contrôler ces consommateurs électriques par l'intermédiaire des récepteurs.

Toutefois, pour permettre le fonctionnement de cette configuration, il est nécessaire de choisir soit un tel télérupteur prévu pour fonctionner avec l'interrupteur qui lui est associé ou bien de remplacer l'interrupteur par un interrupteur prévu pour fonctionner avec un tel télérupteur.

En pratique, dans le domaine de la rénovation, ces télérupteurs permettent deux possibilités, à savoir :
- une première possibilité selon le type d'interrupteur, choisir un télérupteur soit configuré pour fonctionner avec un interrupteur monostable ou soit configuré pour fonctionner avec un interrupteur bistable ;
- une deuxième possibilité selon un tel télérupteur soit configuré pour fonctionner avec un interrupteur monostable ou soit configuré pour fonctionner avec un interrupteur bistable, remplacer l'interrupteur pour permettre son fonctionnement avec ledit télérupteur.

Toutefois, lors d'une première installation, il n'est pas possible de conserver les interrupteurs existants en configurant automatiquement de tels télérupteurs pour adapter leur fonctionnement à leurs interrupteurs respectifs.

En outre, après une première installation, un tel télérupteur est, par exemple, configuré pour fonctionner avec un interrupteur monostable. Dans ce cas, si l'utilisateur souhaite remplacer cet interrupteur monostable par un interrupteur bistable, il est nécessaire de remplacer ou configurer le télérupteur utilisé initialement pour adapter son fonctionnement avec un interrupteur monostable.

Dans tous les cas, ces configurations nécessitent une ou plusieurs opération(s) supplémentaire(s) de la part l'utilisateur. Selon la complexité de l'installation, ces opérations peuvent devenir contraignantes pour cet utilisateur.

Dans une installation domotique d'un bâtiment ou d'un l'habitat, il existe donc un besoin pour une solution permettant de conserver les interrupteurs existants tout en permettant à l'installation domotique de s'adapter automatiquement à tout remplacement par l'utilisateur de l'un de ses interrupteurs monostable par un interrupteur bistable et vice-versa.

La présente invention a pour but de pallier au moins l'un de ces inconvénients en proposant une solution qui permet de conserver les interrupteurs existants.

L'invention a ainsi pour objet un procédé de pilotage d'une installation domotique selon la revendication 1 comprenant :
- au moins un dispositif émetteur comprenant :
- un moyen de détection,
- un moyen de contrôle,
- un moyen d'émission,

ledit dispositif émetteur étant apte à être électriquement relié en série à un premier circuit électrique comprenant :
- un interrupteur monostable ou un interrupteur bistable permettant de changer l'état dudit premier circuit d'un état ouvert à un état fermé et vice-versa,
   ledit dispositif émetteur étant apte à fonctionner dans une première chaîne d'étapes et étant apte à détecter le changement d'état dudit premier circuit de l'état ouvert à l'état fermé et vice-versa,
- au moins un dispositif récepteur apte à être électriquement relié en série, à l'aide d'un moyen de connexion, à un deuxième circuit électrique comprenant au moins un consommateur électrique, de préférence un moyen d'éclairage,
procédé caractérisé en ce qu'il comprend au moins une première chaîne d'étapes comprenant :
- une étape de détection d'un changement de l'état ouvert à l'état fermé dudit premier circuit, cette étape étant réalisée à l'aide dudit moyen de détection ;
- une étape de génération d'une première commande C1 d'un premier type, cette étape étant réalisée à l'aide dudit moyen de contrôle ;
- une étape d'émission de la première commande C1 depuis le dispositif émetteur vers le dispositif récepteur, cette étape étant réalisée à l'aide dudit moyen d'émission ;
- une étape de mesure dans le temps d'une durée variable T0 pendant laquelle ledit premier circuit est dans son état fermé, cette étape étant réalisée à l'aide dudit moyen de contrôle ;
- une étape de comparaison de ladite durée variable T0 à une durée fixe prédéterminée T1, cette étape étant réalisée à l'aide dudit moyen de contrôle ;
- une étape de génération d'une deuxième commande C2 d'un deuxième type lorsque la durée variable T0 est supérieure ou égale à ladite durée fixe prédéterminée T1 et lorsqu'un changement de l'état fermé à l'état ouvert dudit premier circuit est détecté, cette étape étant réalisée à l'aide dudit moyen de contrôle ;
- une étape de deuxième d'émission de la deuxième commande C2 depuis le dispositif émetteur vers le dispositif récepteur, cette étape étant réalisée à l'aide dudit moyen d'émission.

L'invention a également pour objet un dispositif selon la revendication 12 pour la mise en œuvre du procédé, comprenant :
- un moyen d'alimentation apte à être électriquement relié une source d'alimentation ;
- un moyen de connexion apte à être électriquement relié en série à un premier circuit électrique comprenant un interrupteur monostable ou un interrupteur bistable permettant de changer l'état dudit premier circuit d'un état ouvert à un état fermé et vice-versa ;
- un moyen d'émission permettant d'émettre une première commande et/ou une deuxième commande depuis le dispositif émetteur vers le dispositif récepteur,
caractérisé en ce que ledit dispositif émetteur comprend en outre :
- un moyen de détection permettant de détecter l'état ouvert et/ou fermé dudit deuxième circuit ;
- un moyen de contrôle permettant de réaliser les étapes liées à ce dit moyen de contrôle.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

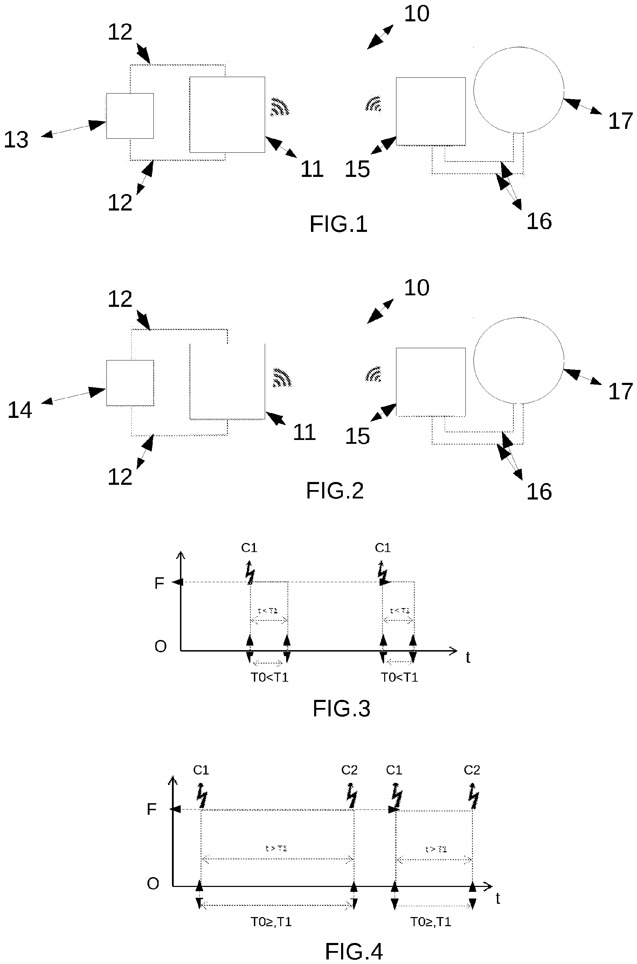

- la figure 1 est une représentation schématique d'une installation domotique selon l'invention équipée d'un interrupteur monostable,
- la figure 2 est une représentation schématique d'une installation domotique selon l'invention équipée d'un interrupteur bistable,
- la figure 3 est une représentation graphique d'un cycle de fonctionnement d'un interrupteur monostable au cours du temps,
- la figure 4 est une représentation graphique d'un cycle de fonctionnement d'un interrupteur bistable au cours du temps,
- la figure 5 est une représentation sous forme d'ordinogramme du procédé selon l'invention,
- la figure 5A est une représentation sous forme d'ordinogramme d'un mode particulier de l'invention,
- la figure 6 est une représentation sous forme d'ordinogramme d'un deuxième mode particulier de l'invention,
- la figure 7 est une représentation sous forme d'ordinogramme d'un troisième mode particulier de l'invention,
- la figure 8 est une représentation sous forme d'ordinogramme d'un quatrième mode particulier de l'invention,
- la figure 9 est une représentation sous forme d'ordinogramme d'un cinquième mode particulier de l'invention,
- la figure 10 est une représentation sous forme d'ordinogramme d'un sixième mode particulier de l'invention,
- la figure 11 est une représentation sous forme d'ordinogramme d'un septième mode particulier de l'invention,
- la figure 12A est une représentation schématique de la au moins première chaîne d'étapes selon l'invention,
- la figure 12B est une représentation schématique du processus d'apprentissage du dispositif émetteur selon l'invention.

Dans le présent document, une chaîne d'étapes, désigne au moins deux étapes pouvant être exécutées selon un ordre quelconque déterminé aux besoins de l'invention.

La présente invention porte sur un procédé de pilotage d'une installation domotique 10 comprenant :
- au moins un dispositif émetteur 11 comprenant :
   - un moyen de détection,
   - un moyen de contrôle,
   - un moyen d'émission,
   ledit dispositif émetteur 11 étant apte à être électriquement relié en série à un premier circuit 12 électrique comprenant :
   - un interrupteur monostable 13 ou un interrupteur bistable 14 permettant de changer l'état dudit premier circuit 12 d'un état ouvert O à un état fermé F et vice-versa,
      ledit dispositif émetteur 11 étant apte à fonctionner dans une première chaîne d'étapes et étant apte à détecter le changement d'état dudit premier circuit 12 de l'état ouvert O à l'état fermé F et vice-versa,
   - au moins un dispositif récepteur 15 apte à être électriquement relié en série, à l'aide d'un moyen de connexion, à un deuxième circuit 16 électrique 16 comprenant au moins un consommateur électrique, de préférence un moyen d'éclairage 17,
   procédé caractérisé en ce qu'il comprend au moins une première chaîne d'étapes comprenant :
   - une étape de détection (a) d'un changement de l'état ouvert O à l'état fermé F dudit premier circuit 12, cette étape étant réalisée à l'aide dudit moyen de détection ;
   - une étape de génération (b) d'une première commande C1 d'un premier type, cette étape étant réalisée à l'aide dudit moyen de contrôle ;
   - une étape d'émission (c) de la première commande C1 depuis le dispositif émetteur 11 vers le dispositif récepteur 15, cette étape étant réalisée à l'aide dudit moyen d'émission ;
   - une étape de mesure (d) dans le temps d'une durée variable T0 pendant laquelle ledit premier circuit 12 est dans son état fermé F, cette étape étant réalisée à l'aide dudit moyen de contrôle ;
   - une étape de comparaison (e) de ladite durée variable T0 à une durée fixe prédéterminée T1, cette étape étant réalisée à l'aide dudit moyen de contrôle ;
   - une étape de génération (f) d'une deuxième commande C2 d'un deuxième type lorsque la durée variable T0 est supérieure ou égale à ladite durée fixe prédéterminée T1 et lorsqu'un changement de l'état fermé F à l'état ouvert O dudit premier circuit 12 est détecté, cette étape étant réalisée à l'aide dudit moyen de contrôle ;
   - une étape de deuxième d'émission (g) de la deuxième commande C2 depuis le dispositif émetteur 11 vers le dispositif récepteur 15, cette étape étant réalisée à l'aide dudit moyen d'émission.

Selon l'invention, les étapes de mesure (d) et de comparaison (e) du procédé permettent par l'intermédiaire du dispositif émetteur de distinguer l'utilisation d'un interrupteur et ainsi identifier le type d'interrupteur monostable ou bistable qui lui est relié électriquement.

En effet, l'étape de mesure (d) dans le temps d'une durée variable T0 pendant laquelle ledit premier circuit est dans son état fermé, permet d'analyser les utilisations telles que décrites des interrupteurs monostables ou bistables.

L'étape de comparaison (e) de ladite durée variable T0 à une durée fixe prédéterminée T1, permet de distinguer l'utilisation d'un interrupteur monostable par rapport à l'utilisation d'un interrupteur bistable.

Ainsi, grâce à un tel procédé, il est possible d'identifier automatiquement si l'interrupteur relié au dispositif émetteur est un interrupteur monostable ou un interrupteur bistable. De cette façon, pour l'utilisateur la première installation sera grandement facilitée tout conservant les interrupteurs existants. De plus, lors d'un changement de tout interrupteur monostable par un interrupteur bistable ou vice-versa, le procédé permet d'éviter à l'utilisateur de configurer l'installation domotique pour assurer son fonctionnement avec le nouvel interrupteur.

Dans ce mode de réalisation, lorsque l'interrupteur est un interrupteur monostable 13 ou un interrupteur bistable 14, pour déclencher l'allumage du moyen d'éclairage 17, l'utilisateur appuie une première fois sur l'interrupteur monostable 13 ou bascule une première fois l'interrupteur bistable 14, provoquant ainsi l'état fermé F du premier circuit 12. En réponse à cet appui, le dispositif émetteur 11 envoie alors une première commande C1 au dispositif récepteur 15 provoquant l'état fermé du deuxième circuit 16 et ainsi l'allumage du moyen d'éclairage 17, le deuxième circuit 16 étant initialement dans un état ouvert.

En même temps le dispositif émetteur 11 mesure un premier temps T0 pendant lequel le premier circuit 12 est dans son état fermé F.

Lorsque ce temps T0 est strictement inférieur à un deuxième temps T1 correspondant approximativement à une valeur comprise entre 300 millisecondes et 1 seconde, le dispositif émetteur 11 identifie l'interrupteur qui lui est relié électriquement comme étant un interrupteur monostable 13.

Au-delà de ce temps T0, le premier circuit 12 est dans son état ouvert O. A la détection de l'état ouvert O du premier circuit 12, aucune première ou deuxième commandes C1, C2 n'est envoyée depuis le dispositif émetteur 11 vers le dispositif récepteur 15.

Un nouvel appui sur l'interrupteur monostable 13 ou un nouveau basculement de l'interrupteur bistable 14 provoque à nouveau l'état fermé F du premier circuit 12. En réponse à cet appui ou à ce basculement, le dispositif émetteur 11 envoie alors à nouveau une première commande C1 au dispositif récepteur 15 provoquant cette fois l'état ouvert du deuxième circuit 16 et ainsi l'extinction du moyen d'éclairage 17.

Lorsque ce temps T0 est supérieur ou égal à ce deuxième temps T1, le dispositif émetteur 11 identifie l'interrupteur qui lui est relié électriquement comme étant un interrupteur bistable 14.

A ce temps T1 ou au-delà, le premier circuit 12 est toujours dans son état fermé F.

Un nouvel appui sur l'interrupteur monostable 13 ou un nouveau basculement de l'interrupteur bistable 14 provoque l'état ouvert O du premier circuit 12. En réponse à cet appui ou à ce basculement, le dispositif émetteur 11 envoie alors une deuxième commande C2 au dispositif récepteur 15 provoquant cette fois l'état ouvert du deuxième circuit 16 et ainsi l'extinction du moyen d'éclairage 17.

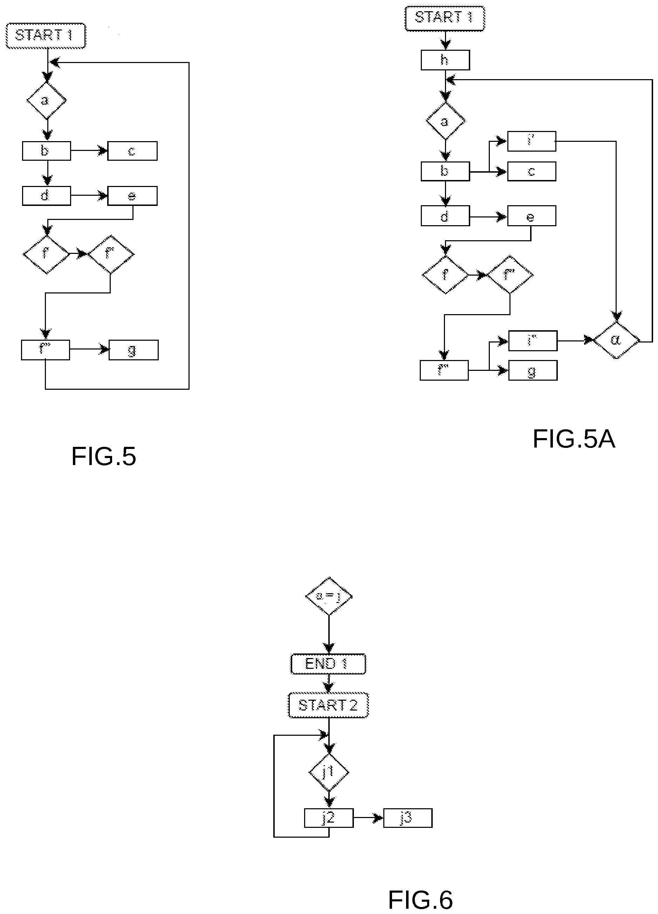

La figure 5 représente la au moins première chaîne d'étapes dans lequel, le début de cette au moins première chaîne d'étapes est illustré par une étape d'exécution START 1 et l'étape de génération (f) selon l'invention est représentée par :
- une première étape de vérification d'une condition de génération (f') selon laquelle : lorsque la durée variable T0 est supérieure ou égale à ladite durée fixe prédéterminée T1, cette étape étant réalisée à l'aide dudit moyen de contrôle ; et
- une deuxième étape de vérification d'une condition de génération (f") selon laquelle : lorsqu'un changement de l'état fermé F à l'état ouvert O dudit premier circuit 12 est détecté, cette étape étant réalisée à l'aide dudit moyen de contrôle ;
- une étape d'exécution de génération (f"') d'une deuxième commande C2 d'un deuxième type, cette étape étant réalisée à l'aide dudit moyen de contrôle) et étant conditionnée par les première et deuxième étapes de vérification d'une condition de génération (f') et (f").

En outre, on a également représenté après l'étape d'exécution de génération (f"') une boucle de retour vers l'étape de détection (a). Cette boucle représente la répétition de la deuxième chaîne d'étapes.

Selon un mode particulier de l'invention, les étapes de détection (a), de génération (b), d'émission (c), de mesure (d), de comparaison (e), de génération (f) et de deuxième d'émission (g) sont réalisées successivement.

Selon un mode particulier de l'invention, les étapes de détection (a), de génération (b), de mesure (d), de comparaison (e), de génération (f) et de deuxième d'émission (g) sont réalisées successivement, l'étape d'émission (c) étant réalisée simultanément avec l'étape (d).

Selon un mode de réalisation préféré :
- dans l'étape d'émission (c), la première commande C1 est émise par le biais d'un signal radiofréquence ; et/ou
- dans l'étape de deuxième d'émission (g), la deuxième commande C2 est émise par le biais d'un signal radiofréquence.

Selon un mode de réalisation préféré la première commande C1 et la deuxième commande C2 correspondent chacune à un même un signal radiofréquence.

Selon l'invention, le procédé comprend:
- une étape de création (h) d'un tableau de données dans une mémoire, cette étape étant réalisée à l'aide d'un moyen de mémoire dudit dispositif émetteur 11 préalablement à l'étape de détection (a).

Selon un autre mode de réalisation préféré, le procédé comprend en outre :
- une étape de création (h) d'un tableau de données dans une mémoire, cette étape étant réalisée à l'aide d'un moyen de mémoire dudit dispositif émetteur 11 préalablement à l'étape de détection (a) et ;
- une étape de sauvegarde (i) successivement dans le tableau, pour chaque génération de ladite première commande C1 et pour chaque génération de ladite deuxième commande C2, d'une donnée caractérisant le type de commande généré, c'est-à-dire soit du premier type, soit du deuxième type, cette étape étant réalisée à l'aide dudit moyen de mémoire.

Selon l'invention, on utilise le tableau de données pour sauvegarder les différentes commandes C1, C2 générées par l'utilisation d'un interrupteur par un utilisateur. Pour en faciliter le traitement, après avoir sauvegardé une première donnée, on sauvegarde chaque nouvelle donnée successivement à la précédente donnée sauvegardée. Par exemple, le tableau de données peut contenir des données pouvant être représentées par le tableau suivant : [C1, C2, C1, C1, C1, C2, C1, C1]. Ce tableau représente quatre cycles de fonctionnement d'une utilisation d'un interrupteur monostable 13 ou bistable 14, soit (C1, C2), (C1, C1), (C1, C2), (C1, C1).

L'étape de sauvegarde (i) est représentée par :
- une première étape de sauvegarde (i') successivement dans le tableau, pour chaque génération de ladite première commande C1, d'une donnée caractérisant le type de commande généré, c'est-à-dire du premier type, cette étape étant réalisée à l'aide dudit moyen de mémoire ;
- une deuxième étape de sauvegarde (i") successivement dans le tableau, pour chaque génération de ladite deuxième commande C2, une donnée caractérisant le type de commande généré, c'est-à-dire du deuxième type, cette étape étant réalisée à l'aide dudit moyen de mémoire.

On notera que pour un interrupteur monostable 13 relié à un dispositif émetteur 11, le tableau de données peut tout de même contenir des cycles propres à l'utilisation d'un interrupteur bistable 14. En effet, le dispositif émetteur 11 peut identifier l'interrupteur monostable 13 comme étant un interrupteur bistable 14, lorsque l'utilisateur maintien appuyé l'interrupteur monostable 13 pendant un temps T1 ou au-delà.

Inversement, on notera que pour un interrupteur bistable 14 relié à un dispositif émetteur 11, le tableau de données peut tout de même contenir des cycles propres à l'utilisation d'un interrupteur monostable 13. En effet, le dispositif émetteur 11 peut identifier l'interrupteur bistable 14 comme étant un interrupteur monostable 13, lorsque l'utilisateur bascule une premier et deuxième fois l'interrupteur bistable 14 dans un temps inférieur au temps T1.

Un cycle de fonctionnement correspond à l'utilisation d'un interrupteur par l'utilisateur lors de l'allumage puis de l'extinction, par exemple, d'un moyen d'éclairage 17.

Grâce aux étapes de création (h) et de sauvegarde (i) il est possible de sauvegarder des données relatives à l'utilisation d'un interrupteur monostable 13 ou d'un interrupteur bistable 14. Ainsi, ces données peuvent être analysées pour ensuite permettre de configurer automatiquement le dispositif émetteur 11 selon une chaîne d'étapes parmi plusieurs chaînes d'étapes.

Selon un mode particulier de l'invention, le procédé comprend en outre, à la suite de l'étape de sauvegarde (i), successivement :
- une étape de passage (j) depuis ladite au moins première chaîne d'étapes vers une deuxième chaîne d'étapes lorsqu'un premier nombre prédéterminé de données sauvegardées dans le tableau, correspondant chacune, successivement, à une première commande C1 du premier type, est atteint, l'étape de passage (j) étant réalisée à l'aide du moyen de contrôle, ladite deuxième chaîne d'étapes comprenant :
- une étape (j1) réitérant l'étape de détection (a) d'un changement de l'état ouvert O à l'état fermé F dudit premier circuit 12, cette étape étant réalisée à l'aide dudit moyen de détection ;
- une étape (j2) réitérant l'étape de génération (b) d'une première commande C1 d'un premier type, cette étape étant réalisée à l'aide dudit moyen de contrôle ;
- une étape (j3) réitérant l'étape d'émission (c) de la première commande C1 depuis le dispositif émetteur 11 vers le dispositif récepteur 15, cette étape étant réalisée à l'aide dudit moyen d'émission.

Ce premier nombre prédéterminé de données est égal à un nombre entier positif quelconque. Préférentiellement, ce nombre est égal à 10, encore plus préférentiellement il est égal à 20.

Dans ce mode particulier de l'invention, on a sauvegardé dans le tableau de données les différentes commandes C1, C2 générées par l'utilisation d'un interrupteur par un utilisateur.

Dans ce même mode particulier de l'invention, le tableau de données comprend au moins une succession de données correspondant à la première commande C1. Dans le cas d'un premier nombre prédéterminé de données égal à 10, le tableau peut, selon l'utilisation, être représenté comme suit : [C1, C2, C1, C1, C1, C1, C1, C1, C1, C1, C1, C1].

Ainsi, le tableau comprend bien au moins une succession de dix données C1 correspondant à cinq cycles de fonctionnement d'une utilisation d'un interrupteur monostable 13.

Dans ce cas, le dispositif émetteur 11 passe depuis la au moins première chaîne d'étapes vers la deuxième chaîne d'étapes correspondant à celle d'un interrupteur monostable 13.

Dans cette deuxième chaîne d'étapes, les données relatives aux différentes commandes C1, C2 ne sont plus sauvegardées dans le tableau de données. Le dispositif émetteur 11 ne peut que générer des premières commandes C1 du premier type correspondant au cycle de fonctionnement d'un interrupteur monostable 13.

Les figures 5A et 6 représentent les première et deuxième chaînes d'étapes. Dans ce mode de réalisation la référence (α) de la figure 5A représente l'étape de comptage (j).

La au moins première chaîne d'étapes comprend en outre les étapes de création (h), de sauvegarde (i) et de passage (j) depuis ladite au moins première chaîne d'étapes vers une deuxième chaîne d'étapes.

La au moins première chaîne d'étapes comprend en outre les étapes de création (h) et de sauvegarde (i) consistent à créer un tableau de données et sauvegarder des données relatives aux première et deuxième commandes C1, C2.

L'étape de passage (j) permet de passer depuis la au moins première chaîne d'étapes vers la deuxième chaîne d'étapes.

La fin de cette au moins première chaîne d'étapes est illustrée par une étape d'exécution END 1 et le début de la deuxième chaîne d'étapes est illustré par une étape d'exécution START 2.

En outre, on a représenté après l'étape (j2) réitérant l'étape de génération (b) une première boucle de retour vers l'étape (j1) réitérant l'étape de détection (a). Cette première boucle représente la répétition de la deuxième chaîne d'étapes.

On a également représenté après l'étape de passage (j) depuis ladite au moins première chaîne d'étapes vers une deuxième chaîne d'étapes une deuxième boucle de retour vers l'étape de détection (a). Cette deuxième boucle représente la répétition de cette au moins première chaîne d'étapes jusqu'à la validation de cette étape de passage (j).

Selon un autre mode particulier de l'invention, le procédé comprend en outre, à la suite de l'étape de sauvegarde (i), successivement :
- une étape de passage (k) depuis ladite au moins première chaîne d'étapes vers une troisième chaîne d'étapes lorsqu'un deuxième nombre prédéterminé de données sauvegardées dans le tableau, correspondant à une combinaison successive de première commande C1 du premier type et de deuxième commande C2 du deuxième type, est atteint, l'étape de passage (k) étant réalisée à l'aide du moyen de contrôle, ladite troisième chaîne d'étapes comprenant :
- une étape (k1) réitérant l'étape de détection (a) d'un changement de l'état ouvert O à l'état fermé F dudit premier circuit 12, cette étape étant réalisée à l'aide dudit moyen de détection ;
- une étape (k2) réitérant l'étape de génération (b) d'une première commande C1 d'un premier type, cette étape étant réalisée à l'aide dudit moyen de contrôle ;
- une étape (k3) réitérant l'étape d'émission (c) de la première commande C1 depuis le dispositif émetteur 11 vers le dispositif récepteur 15, cette étape étant réalisée à l'aide dudit moyen d'émission ;
- une étape (k4) réitérant l'étape de mesure (d) dans le temps d'une durée variable T0 pendant laquelle ledit premier circuit 12 est dans son état fermé F, cette étape étant réalisée à l'aide dudit moyen de contrôle ;
- une étape de détection (k5) d'un changement de l'état fermé F à l'état ouvert O dudit premier circuit 12, cette étape étant réalisée à l'aide dudit moyen de détection ;
- une étape de génération (k6) d'une deuxième commande C2 d'un deuxième type, cette étape étant réalisée à l'aide dudit moyen de contrôle ;
- une étape (k7) réitérant l'étape d'émission (g) de la deuxième commande C2 depuis le dispositif émetteur 11 vers le dispositif récepteur 15, cette étape étant réalisée à l'aide dudit moyen d'émission.

Ce deuxième nombre prédéterminé de données est égal à un nombre entier positif quelconque, préférentiellement ce nombre est égal à 5, encore plus préférentiellement il est égal à 10.

Dans ce même mode particulier de l'invention, le tableau de données comprend au moins une succession de données correspondant à une combinaison successive de première commande C1 et de deuxième commande C2. Dans le cas d'un deuxième nombre prédéterminé de données égal à 5, le tableau peut, selon l'utilisation, être représenté comme suit : [C1, C1, C1, C2, C1, C2, C1, C2, C1, C2, C1, C2].

Ainsi, le tableau comprend bien au moins une succession de cinq données C1, C2 correspondant à cinq cycles de fonctionnement d'une utilisation d'un interrupteur bistable 14.

Dans ce cas, le dispositif émetteur 11 passe depuis la au moins première chaîne d'étapes vers la troisième chaîne d'étapes. Cette troisième chaîne d'étapes correspond à celle d'un interrupteur bistable 14.

Dans cette troisième chaîne d'étapes, les données relatives aux différentes commandes C1, C2 ne sont plus sauvegardées dans le tableau de données. Le dispositif émetteur 11 ne peut que générer des combinaisons successives de première commande C1 et de deuxième commande C2, correspondant au cycle de fonctionnement d'un interrupteur bistable 14.

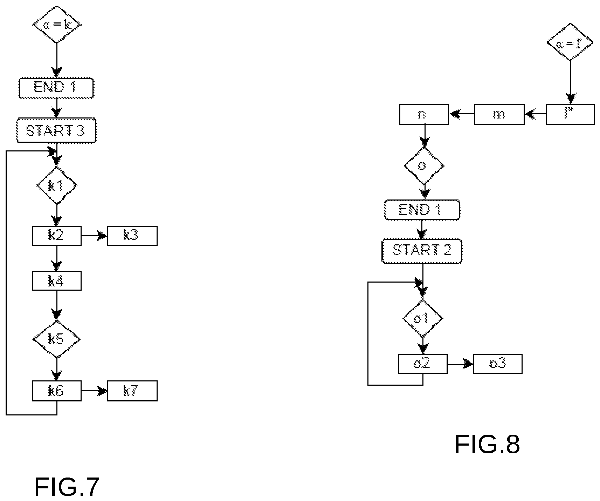

Les figures 5A et 7 représentent les première et troisième chaînes d'étapes. Dans ce mode de réalisation la référence (α) de la figure 5A représente l'étape de comptage (k).

La au moins première chaîne d'étapes correspond à celle décrite dans la figure 6, l'étape de passage (k) depuis ladite au moins première chaîne d'étapes vers une troisième chaîne d'étapes remplace l'étape de passage (j).

L'étape de passage (k) permet de passer depuis la au moins première chaîne d'étapes vers la troisième chaîne d'étapes.

La fin de cette au moins première chaîne d'étapes est illustrée par une étape d'exécution END 1 et le début de cette troisième chaîne d'étapes est illustré par une étape d'exécution START 3.

En outre, on a représenté après l'étape de génération (k6) d'une deuxième commande C2 d'un deuxième type une première boucle de retour vers l'étape (k1) réitérant l'étape de détection (a). Cette première boucle représente la répétition de cette troisième chaîne d'étapes.

On a également représenté après l'étape de passage (k) depuis ladite au moins première chaîne d'étapes vers une troisième chaîne d'étapes une deuxième boucle de retour vers l'étape de détection (a). Cette deuxième boucle représente la répétition de cette au moins première chaîne d'étapes jusqu'à la validation de cette étape (k).

Selon un autre mode particulier de l'invention, le procédé comprend en outre, à la suite de l'étape de sauvegarde (i), successivement :
- une étape de comptage (1) d'un premier nombre de données correspondant au nombre de premières commandes du premier type sauvegardés dans le tableau, auxquelles pour chaque première commande C1 du premier type suit dans le tableau une autre première commande C1 du premier type, et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (m) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (n) dudit premier nombre audit deuxième nombre, cette étape étant réalisée à l'aide dudit moyen de contrôle ;
- une étape de passage (o) depuis ladite au moins première chaîne d'étapes vers une deuxième chaîne d'étapes lorsque ledit premier nombre est strictement supérieur au double dudit deuxième nombre, l'étape de passage (o) étant réalisée à l'aide du moyen de contrôle, ladite deuxième chaîne d'étapes comprenant :
- une étape (o1) réitérant l'étape de détection (a) d'un changement de l'état ouvert O à l'état fermé F dudit premier circuit 12, cette étape étant réalisée à l'aide dudit moyen de détection ;
- une étape (o2) réitérant l'étape de génération (b) d'une première commande C1 d'un premier type, cette étape étant réalisée à l'aide dudit moyen de contrôle ;
- une étape (o3) réitérant l'étape d'émission (c) de la première commande C1 depuis le dispositif émetteur 11 vers le dispositif récepteur 15, cette étape étant réalisée à l'aide dudit moyen d'émission.

Ce premier et deuxième nombre prédéterminé de données sont chacun égal à un nombre entier positif quelconque dépendant de l'utilisation de l'interrupteur concerné.

Une donnée de ce premier nombre prédéterminé de données est égal à une combinaison successive de deux données correspondant chacune à deux première commande C1.

Une donnée de ce deuxième nombre prédéterminé de données est égale à une combinaison successive de deux données correspondant à une première commande C1 suivie d'une deuxième commande C2.

Le troisième nombre prédéterminé de données correspond au nombre de données contenues successivement dans le tableau de données.

De façon particulière, ce troisième nombre prédéterminé de données est égal à un nombre entier positif quelconque. Préférentiellement, ce nombre est égal à 10, encore plus préférentiellement il est égal à 20.

Dans le cas d'un troisième nombre prédéterminé de données égal à 10, le tableau peut, selon l'utilisation, être représenté comme suit : [C1, C1, C1, C2, C1, C1, C1, C2, C1, C1]. Ce tableau représente trois cycles (C1, C1) de fonctionnement d'une utilisation d'un interrupteur monostable 13 et deux cycles (C1, C2) de fonctionnement d'une utilisation d'un interrupteur bistable 14.

Dans ce même cas, on compte alors un premier nombre de données égal à cinq et un deuxième nombre de données égal à deux. Le premier nombre de données étant impair, on l'incrémente alors de un. De cette façon, on peut comparer ce premier nombre de données à un nombre de cycles de fonctionnement d'un interrupteur monostable 13. En effet, ce premier nombre égal alors à six correspond au trois cycles de fonctionnement d'un interrupteur monostable 13 du tableau de données. Le deuxième nombre de données est lui égal à deux est correspond aux deux cycles de fonctionnement d'un interrupteur bistable 14 du tableau de données.

Ce premier nombre de données est supérieur au double du deuxième nombre de données. Le dispositif émetteur 11 a alors identifié davantage de cycle de fonctionnement d'un interrupteur monostable 13 que de cycle de fonctionnement d'un interrupteur bistable 14.

Dans ce cas, le dispositif émetteur 11 passe depuis la au moins première chaîne d'étapes vers la deuxième chaîne d'étapes correspondant à celle d'un interrupteur monostable 13.

Les figures 5A et 8 représentent les première et deuxième chaînes d'étapes. Dans ce mode de réalisation la référence (α) de la figure 5A représente une étape de vérification d'une condition de comptage (1').

La au moins première chaîne d'étapes correspond à celle décrite dans la figure 6, l'étape de comptage (1) remplace l'étape de passage (j).

L'étape de comptage (1) est représentée par :
- une étape de vérification d'une condition de comptage (1') selon laquelle : lorsqu'un troisième nombre prédéterminé de données sauvegardées dans le tableau est atteint, cette étape étant réalisée à l'aide dudit moyen de contrôle ;
- une étape d'exécution de comptage (1") d'un premier nombre de données correspondant au nombre de premières commandes du premier type sauvegardés dans le tableau, auxquelles pour chaque première commande C1 du premier type suit, dans le tableau, une autre première commande C1 du premier type, et d'incrémentation dudit premier nombre d'un nombre égal à un lorsque ledit premier nombre est impair, cette étape étant réalisée à l'aide dudit moyen de contrôle et étant conditionnée par l'étape de vérification de la condition de comptage (1').

De plus, la au moins première chaîne d'étapes comprend également, les étapes supplémentaires de comptage (m), de comparaison (n) et de passage (o) depuis ladite au moins première chaîne d'étapes vers une deuxième chaîne d'étapes, exécutées successivement après l'étape (1").

Les étapes de comptage (1) et (m), de comparaison (n) et de passage (o) depuis ladite au moins première chaîne d'étapes vers une deuxième chaîne d'étapes permettent de passer depuis cette au moins première chaîne d'étape vers la deuxième chaîne d'étapes.

La fin de cette au moins première chaîne d'étapes est illustrée par une étape d'exécution END 1 et le début de la deuxième chaîne d'étapes est illustré par une étape d'exécution START 2

En outre, on a représenté après l'étape (o2) réitérant l'étape de génération (b) une première boucle de retour vers l'étape (o1). Cette première boucle représente la répétition de cette deuxième chaîne d'étapes.

On a également représenté après l'étape de vérification d'une condition de comptage (1') une deuxième boucle de retour vers l'étape de détection (a). Cette deuxième boucle représente la répétition de cette au moins première chaîne d'étapes jusqu'à la validation de l'étape de vérification d'une condition de comptage (1').

Selon un autre mode particulier de l'invention, le procédé comprend en outre, à la suite de l'étape de sauvegarde (i), successivement :
- une étape de comptage (p) d'un premier nombre de données correspondant au nombre de premières commandes du premier type sauvegardés dans le tableau, auxquelles pour chaque première commande C1 du premier type suit dans le tableau une autre première commande C1 du premier type, et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (q) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (r) dudit premier nombre audit deuxième nombre, cette étape étant réalisée à l'aide dudit moyen de contrôle ;
- une étape de passage (s) depuis ladite au moins première chaîne d'étapes vers une troisième chaîne d'étapes lorsque le double dudit deuxième nombre est strictement supérieur audit premier nombre, cette étape étant réalisée à l'aide du moyen de contrôle, ladite troisième chaîne d'étapes comprenant :
- une étape (s1) réitérant l'étape de détection (a) d'un changement de l'état ouvert O à l'état fermé F dudit premier circuit 12, cette étape étant réalisée à l'aide dudit moyen de détection ;
- une étape (s2) réitérant l'étape de génération (b) d'une première commande C1 d'un premier type, cette étape étant réalisée à l'aide dudit moyen de contrôle ;
- une étape (s3) réitérant l'étape d'émission (c) de la première commande C1 depuis le dispositif émetteur 11 vers le dispositif récepteur 15, cette étape étant réalisée à l'aide dudit moyen d'émission ;
- une étape (s4) réitérant l'étape de mesure (d) dans le temps d'une durée variable T0 pendant laquelle ledit premier circuit 12 est dans son état fermé F, cette étape étant réalisée à l'aide dudit moyen de contrôle ;
- une étape de détection (s5) d'un changement de l'état fermé F à l'état ouvert O dudit premier circuit 12, cette étape étant réalisée à l'aide dudit moyen de détection ;
- une étape de génération (s6) d'une deuxième commande C2 d'un deuxième type, cette étape étant réalisée à l'aide dudit moyen de contrôle ;
- une étape (s7) réitérant l'étape d'émission (g) de la deuxième commande C2 depuis le dispositif émetteur 11 vers le dispositif récepteur 15, cette étape étant réalisée à l'aide dudit moyen d'émission.

Dans le cas d'un troisième nombre prédéterminé de données égal à 10, le tableau peut, selon l'utilisation, être représenté comme suit : [C1, C2, C1, C2, C1, C1, C1, C1, C1, C2]. Ce tableau représente deux cycles (C1, C1) de fonctionnement d'une utilisation d'un interrupteur monostable 13 et trois cycles (C1, C2) de fonctionnement d'une utilisation d'un interrupteur bistable 14.

Dans ce même cas, on compte alors un premier nombre de données égal à quatre et un deuxième nombre de données égal à trois. Le premier nombre de données étant pair, on ne l'incrémente pas de un. De cette façon, on peut comparer ce premier nombre de données à un nombre de cycles de fonctionnement d'un interrupteur monostable 13. En effet, ce premier nombre égal alors à quatre correspond au deux cycles de fonctionnement d'un interrupteur monostable 13 du tableau de données. Le deuxième nombre de données est lui égal à trois est correspond aux trois cycles de fonctionnement d'un interrupteur bistable 14 du tableau de données.

Ce premier nombre de données est inférieur au double du deuxième nombre de données. Le dispositif émetteur 11 a alors identifié davantage de cycle de fonctionnement d'un interrupteur bistable 14 que de cycle de fonctionnement d'un interrupteur monostable 13.

Dans ce cas, le dispositif émetteur 11 passe depuis la au moins première chaîne d'étapes vers la troisième chaîne d'étapes correspondant à celle d'un interrupteur bistable 14.

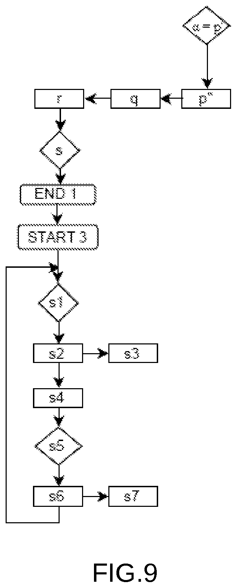

Les figures 5A et 9 représentent les première et troisième chaînes d'étapes. Dans ce mode de réalisation la référence (α) de la figure 5A représente une étape de vérification d'une condition de comptage (p').

La au moins première chaîne d'étapes correspond à celle décrite dans la figure 8, l'étape de comptage (p) est identique à l'étape de comptage (1).

L'étape de comptage (p) est représentée par :
- une étape de vérification d'une condition de comptage (p') identique à l'étape de vérification d'une condition de comptage (1') ;
- une étape d'exécution de comptage (p") identique à l'étape d'exécution de comptage (l") et étant conditionnée par l'étape de vérification de la condition de comptage (p').

De plus, la au moins première chaîne d'étapes comprend également, les étapes supplémentaires de comptage (q), de comparaison (r) et de passage (s) depuis ladite au moins première chaîne d'étapes vers une troisième chaîne d'étapes, exécutées successivement après l'étape d'exécution de comptage (p").

Les étapes de comptage (p) et (q), de comparaison (r) et de passage (s) depuis ladite au moins première chaîne d'étapes vers une troisième chaîne d'étapes permettent de passer depuis cette au moins première chaîne d'étapes vers la troisième chaîne d'étapes.

Les étapes de comptage (q) et de comparaison (r) sont identiques aux étapes de comptage (m) et de comparaison (n).

La fin de cette au moins première chaîne d'étapes est illustrée par une étape d'exécution END 1 et le début de la troisième chaîne d'étapes est illustré par une étape d'exécution START 3

En outre, on a représenté après l'étape de génération (s6) d'une deuxième commande C2 d'un deuxième type une première boucle de retour vers l'étape (s1) réitérant l'étape de détection (a). Cette première boucle représente la répétition de cette troisième chaîne d'étapes.

On a également représenté après l'étape de vérification d'une condition de comptage (p') une deuxième boucle de retour vers l'étape de détection (a). Cette deuxième boucle représente la répétition de cette au moins première chaîne d'étapes jusqu'à la validation de l'étape de vérification d'une condition de comptage (p').

Selon une autre variante de l'invention, le procédé comprend en outre, à la suite de l'étape de sauvegarde (i), successivement :
- une étape de comptage (t) d'un premier nombre de données correspondant au nombre de premières commandes du premier type sauvegardés dans le tableau, auxquelles pour chaque première commande C1 du premier type suit dans le tableau une autre première commande C1 du premier type, et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (u) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (v) dudit premier nombre audit deuxième nombre, cette étape étant réalisée à l'aide dudit moyen de contrôle ;
- une étape de passage (w) depuis ladite au moins première chaîne d'étapes vers une quatrième chaîne d'étapes lorsque ledit premier nombre est strictement supérieur au double dudit deuxième nombre, cette étape étant réalisée à l'aide du moyen de contrôle, ladite quatrième chaîne d'étapes comprenant :
- une étape (w1) réitérant l'étape de détection (a) d'un changement de l'état ouvert O à l'état fermé F dudit premier circuit 12, cette étape étant réalisée à l'aide dudit moyen de détection ;
- une étape (w2) réitérant l'étape de génération (b) d'une première commande C1 d'un premier type, cette étape étant réalisée à l'aide dudit moyen de contrôle ;
- une étape (w3) réitérant l'étape d'émission (c) de la première commande C1 depuis le dispositif émetteur 11 vers le dispositif récepteur 15, cette étape étant réalisée à l'aide dudit moyen d'émission ;
- une étape (w4) réitérant l'étape de mesure (d) dans le temps d'une durée variable T0 pendant laquelle ledit premier circuit 12 est dans son état fermé F, cette étape étant réalisée à l'aide dudit moyen de contrôle ;
- une étape (w5) réitérant l'étape de comparaison (e) de ladite durée variable T0 à une durée fixe prédéterminée T1, cette étape étant réalisée à l'aide dudit moyen de contrôle ;
- une étape (w6) réitérant l'étape de génération (f) d'une deuxième commande C2 d'un deuxième type lorsque la durée variable T0 est supérieure ou égale à ladite durée fixe prédéterminée T1 et lorsqu'un changement de l'état fermé F à l'état ouvert O dudit premier circuit 12 est détecté, cette étape étant réalisée à l'aide dudit moyen de contrôle ;
- une étape de comptage (w7) d'un premier nombre de données correspondant au nombre de premières commandes du premier type sauvegardés dans le tableau, auxquelles pour chaque première commande C1 du premier type suit, dans le tableau, une autre première commande C1 du premier type, et d'incrémentation dudit premier nombre d'un nombre égal à un lorsque ledit premier nombre est impair, cette étape étant réalisée à l'aide dudit moyen de contrôle ;
- une étape de comptage (w8) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (w9) dudit premier nombre audit deuxième nombre, cette étape étant réalisée à l'aide dudit moyen de contrôle ;
- une étape de passage (w10) depuis ladite quatrième chaîne d'étapes vers une cinquième chaîne d'étapes lorsque le double dudit deuxième nombre est strictement supérieur audit premier nombre, cette étape étant réalisée à l'aide du moyen de contrôle, ladite cinquième chaîne d'étapes comprenant :
- une étape (A) réitérant l'étape de détection (a) d'un changement de l'état ouvert O à l'état fermé F dudit premier circuit 12, cette étape étant réalisée à l'aide dudit moyen de détection ;
- une étape (B) réitérant l'étape de génération (b) d'une première commande C1 d'un premier type, cette étape étant réalisée à l'aide dudit moyen de contrôle ;
- une étape (C) réitérant l'étape d'émission (c) de la première commande C1 depuis le dispositif émetteur 11 vers le dispositif récepteur 15, cette étape étant réalisée à l'aide dudit moyen d'émission ;
- une étape (D) réitérant l'étape de mesure (d) dans le temps d'une durée variable T0 pendant laquelle ledit premier circuit 12 est dans son état fermé F, cette étape étant réalisée à l'aide dudit moyen de contrôle ;
- une étape (E) réitérant l'étape de comparaison (e) de ladite durée variable T0 à une durée fixe prédéterminée T1, cette étape étant réalisée à l'aide dudit moyen de contrôle ;
- une étape (F) réitérant l'étape de génération (f) d'une deuxième commande C2 d'un deuxième type lorsque la durée variable T0 est supérieure ou égale à ladite durée fixe prédéterminée T1 et lorsqu'un changement de l'état fermé F à l'état ouvert O dudit premier circuit 12 est détecté, cette étape étant réalisée à l'aide dudit moyen de contrôle ;
- une étape (G) réitérant l'étape d'émission (g) de la deuxième commande C2 depuis le dispositif émetteur 11 vers le dispositif récepteur 15, cette étape étant réalisée à l'aide dudit moyen d'émission ;
- une étape de comptage (H) d'un premier nombre de données correspondant au nombre de premières commandes du premier type sauvegardés dans le tableau, auxquelles pour chaque première commande C1 du premier type suit, dans le tableau, une autre première commande C1 du premier type, et d'incrémentation dudit premier nombre d'un nombre égal à un lorsque ledit premier nombre est impair, cette étape étant réalisée à l'aide dudit moyen de contrôle ;
- une étape de comptage (I) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (J) dudit premier nombre audit deuxième nombre, cette étape étant réalisée à l'aide dudit moyen de contrôle ;
- une étape (K) retournant à l'étape de comptage (w), cette étape étant réalisée à l'aide dudit moyen de contrôle.

Dans le cas d'un troisième nombre prédéterminé de données égal à 10, le tableau peut, selon l'utilisation, être représenté comme suit : [C1, C1, C1, C2, C1, C1, C1, C2, C1, C1].

Le dispositif émetteur 11 a alors identifié davantage de cycle de fonctionnement d'un interrupteur monostable 13 que de cycle de fonctionnement d'un interrupteur bistable 14.

Dans ce cas, le dispositif émetteur 11 passe depuis la au moins première chaîne d'étapes vers la quatrième chaîne d'étapes correspondant à celle d'un interrupteur monostable 13.

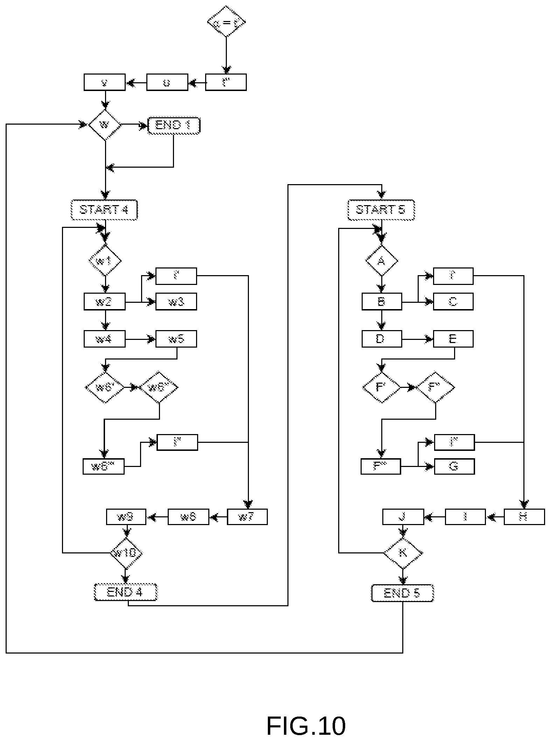

Les figures 5A et 10 représentent les au moins première, quatrième et cinquième chaînes d'étapes. Dans ce mode de réalisation la référence (α) de la figure 5A représente une étape de vérification d'une condition de comptage (t').

La au moins première chaîne d'étapes correspond à celle décrite dans la figure 8, l'étape de comptage (t) est identique à l'étape de comptage (1).

L'étape de comptage (t) est représentée par :
- une étape de vérification d'une condition de comptage (t') identique à l'étape de vérification d'une condition de comptage (1') ;
- une étape d'exécution de comptage (t") identique à l'étape d'exécution de comptage (1") et étant conditionnée par l'étape de vérification de la condition de comptage (t').

De plus, la au moins première chaîne d'étapes comprend également, les étapes supplémentaires de comptage (u), de comparaison (v) et de passage (w) depuis ladite au moins première chaîne d'étapes vers une quatrième chaîne d'étapes, exécutées successivement après l'étape d'exécution de comptage (t").

Les étapes de comptage (t) et (u), de comparaison (v) et de passage (w) depuis ladite au moins première chaîne d'étapes vers une quatrième chaîne d'étapes permettent de passer depuis cette au moins première chaîne d'étapes vers la quatrième chaîne d'étapes.

Les étapes de comptage (u) et de comparaison (v) sont identiques aux étapes de comptage (m) et de comparaison (n).

La fin de cette au moins première chaîne d'étapes est illustrée par une étape d'exécution END 1 et le début de la quatrième chaîne d'étapes est illustré par une étape d'exécution START 4.

La quatrième chaîne d'étapes correspond au fonctionnement d'un interrupteur monostable 13 dans lequel le dispositif émetteur 11 continue de sauvegarder les premier et deuxième commandes C1, C2 en fonction de l'utilisation de l'interrupteur relié à ce dispositif émetteur 11.

L'étape (w6) réitérant l'étape de génération (f) est représentée par :
- une première étape de vérification d'une condition de génération (w6') identique à la première étape de vérification d'une condition de génération (f') ;
- une deuxième étape de vérification d'une condition de génération (w6") identique à la deuxième étape de vérification d'une condition de génération (f") ;
- une étape d'exécution de génération (w6"') identique à l'étape d'exécution de génération (f"') et étant conditionnée par les première et deuxième étapes de vérification de la condition de génération (w6') et (w6"). Pour chaque nouvelle utilisation de l'interrupteur, les étapes de comptage (w7) et (w8) et de comparaison (w9) sont exécutées successivement après l'étape (w6) réitérant l'étape de génération (f).

Les étapes de comptage (w8) et de comparaison (w9) sont identiques aux étapes de comptage (m) et de comparaison (n).

Le dispositif émetteur 11 restera dans la quatrième chaîne d'étapes tant qu'il n'a pas identifié davantage de cycle de fonctionnement d'un interrupteur bistable 14 que de cycle de fonctionnement d'un interrupteur monostable 13.

Le dispositif émetteur 11 passe depuis la quatrième chaîne d'étapes vers la cinquième chaîne d'étapes lorsqu'il a identifié davantage de cycle de fonctionnement d'un interrupteur bistable 14 que de cycle de fonctionnement d'un interrupteur monostable 13.

La fin de la quatrième chaîne d'étapes est illustrée par une étape d'exécution END 4 et le début de la cinquième chaîne d'étapes est illustré par une étape d'exécution START 5.

La cinquième chaîne d'étapes correspond au fonctionnement d'un interrupteur bistable 14 dans lequel le dispositif émetteur 11 continue de sauvegarder les premier et deuxième commandes C1, C2 en fonction de l'utilisation de l'interrupteur relié à ce dispositif émetteur 11.

L'étape (F) réitérant l'étape de génération (f) est représentée par :
- une première étape de vérification d'une condition de génération (F') identique à la première étape de vérification d'une condition de génération (f') ;
- une deuxième étape de vérification d'une condition de génération (F") identique à la deuxième étape de vérification d'une condition de génération (f") ;
- une étape d'exécution de génération (F''') identique à l'étape d'exécution de génération (f"') et étant conditionnée par les première et deuxième étapes de vérification de la condition de génération (F') et (F").

Pour chaque nouvelle utilisation de l'interrupteur, les étapes de comptage (H) et (I) et de comparaison (J) sont exécutées successivement après l'étape (F).

Les étapes de comptage (I) et de comparaison (J) sont identiques aux étapes de comptage (m) et de comparaison (n).

Le dispositif émetteur 11 restera dans la cinquième chaîne d'étapes tant qu'il n'a pas identifié davantage de cycle de fonctionnement d'un interrupteur monostable 13 que de cycle de fonctionnement d'un interrupteur bistable 14.

Le dispositif émetteur 11 passe depuis la cinquième chaîne d'étapes vers la quatrième chaîne d'étapes lorsqu'il a identifié davantage de cycle de fonctionnement d'un interrupteur monostable 13que de cycle de fonctionnement d'un interrupteur bistable 14.

La fin de la cinquième chaîne d'étapes est illustrée par une étape d'exécution END 5 et le début de la quatrième chaîne d'étapes est illustré par l'étape d'exécution START 4.

On a représenté après l'étape de passage (w10) depuis ladite quatrième chaîne d'étapes vers une cinquième chaîne d'étapes une première boucle de retour vers l'étape (w1) réitérant l'étape de détection (a). Cette première boucle représente la répétition de la quatrième chaîne d'étapes jusqu'à la validation de cette étape (w10).

En outre, on a représenté après l'étape (K) retournant à l'étape de comptage (w) une première boucle de retour vers l'étape (A) réitérant l'étape de détection (a). Cette deuxième boucle représente la répétition de la cinquième chaîne d'étapes jusqu'à la validation de cette étape (K).

On a également représenté après l'étape de vérification d'une condition de comptage (t') une troisième boucle de retour vers l'étape de détection (a). Cette troisième boucle représente la répétition de cette au moins première chaîne d'étapes jusqu'à la validation de cette étape (t').

Selon une autre variante de l'invention, le procédé comprend en outre, à la suite de l'étape de sauvegarde (i), successivement :
- une étape de comptage (x) d'un premier nombre de données correspondant au nombre de premières commandes du premier type sauvegardés dans le tableau, auxquelles pour chaque première commande C1 du premier type suit dans le tableau une autre première commande C1 du premier type, et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (y) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (z) dudit premier nombre audit deuxième nombre, cette étape étant réalisée à l'aide dudit moyen de contrôle ;
- une étape de passage (aa) depuis ladite au moins première chaîne d'étapes vers une cinquième chaîne d'étapes lorsque le double dudit deuxième nombre est strictement supérieur audit premier nombre, cette étape étant réalisée à l'aide du moyen de contrôle, ladite cinquième chaîne d'étapes comprenant :
- une étape (aa1) réitérant l'étape de détection (a) d'un changement de l'état ouvert O à l'état fermé F dudit premier circuit 12, cette étape étant réalisée à l'aide dudit moyen de détection ;
- une étape (aa2) réitérant l'étape de génération (b) d'une première commande C1 d'un premier type, cette étape étant réalisée à l'aide dudit moyen de contrôle ;
- une étape (aa3) réitérant l'étape d'émission (c) de la première commande C1 depuis le dispositif émetteur 11 vers le dispositif récepteur 15, cette étape étant réalisée à l'aide dudit moyen d'émission ;
- une étape (aa4) réitérant l'étape de mesure (d) dans le temps d'une durée variable T0 pendant laquelle ledit premier circuit 12 est dans son état fermé F, cette étape étant réalisée à l'aide dudit moyen de contrôle ;
- une étape (aa5) réitérant l'étape de comparaison (e) de ladite durée variable T0 à une durée fixe prédéterminée T1, cette étape étant réalisée à l'aide dudit moyen de contrôle ;
- une étape (aa6) réitérant l'étape de génération (f) d'une deuxième commande C2 d'un deuxième type lorsque la durée variable T0 est supérieure ou égale à ladite durée fixe prédéterminée T1 et lorsqu'un changement de l'état fermé F à l'état ouvert O dudit premier circuit 12 est détecté, cette étape étant réalisée à l'aide dudit moyen de contrôle ;
- une étape (aa7) réitérant l'étape d'émission (g) de la deuxième commande C2 depuis le dispositif émetteur 11 vers le dispositif récepteur 15, cette étape étant réalisée à l'aide dudit moyen d'émission ;
- une étape de comptage (aa8) d'un premier nombre de données correspondant au nombre de premières commandes du premier type sauvegardés dans le tableau, auxquelles pour chaque première commande C1 du premier type suit, dans le tableau, une autre première commande C1 du premier type, et d'incrémentation dudit premier nombre d'un nombre égal à un lorsque ledit premier nombre est impair, cette étape étant réalisée à l'aide dudit moyen de contrôle ;
- une étape de comptage (aa9) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (aa10) dudit premier nombre audit deuxième nombre, cette étape étant réalisée à l'aide dudit moyen de contrôle ;
- une étape de passage (aa11) depuis ladite cinquième chaîne d'étapes vers une quatrième chaîne d'étapes lorsque ledit premier nombre est strictement supérieur au double dudit deuxième nombre, cette étape étant réalisée à l'aide du moyen de contrôle, ladite quatrième chaîne d'étapes comprenant :
- une étape (A1) réitérant l'étape de détection (a) d'un changement de l'état ouvert O à l'état fermé F dudit premier circuit 12, cette étape étant réalisée à l'aide dudit moyen de détection ;
- une étape (B1) réitérant l'étape de génération (b) d'une première commande C1 d'un premier type, cette étape étant réalisée à l'aide dudit moyen de contrôle ;
- une étape (C1) réitérant l'étape d'émission (c) de la première commande C1 depuis le dispositif émetteur 11 vers le dispositif récepteur 15, cette étape étant réalisée à l'aide dudit moyen d'émission ;
- une étape (D1) réitérant l'étape de mesure (d) dans le temps d'une durée variable T0 pendant laquelle ledit premier circuit 12 est dans son état fermé F, cette étape étant réalisée à l'aide dudit moyen de contrôle ;
- une étape (E1) réitérant l'étape de comparaison (e) de ladite durée variable T0 à une durée fixe prédéterminée T1, cette étape étant réalisée à l'aide dudit moyen de contrôle ;
- une étape (F1) réitérant l'étape de génération (f) d'une deuxième commande C2 d'un deuxième type lorsque la durée variable T0 est supérieure ou égale à ladite durée fixe prédéterminée T1 et lorsqu'un changement de l'état fermé F à l'état ouvert O dudit premier circuit 12 est détecté, cette étape étant réalisée à l'aide dudit moyen de contrôle ;
- une étape de comptage (G1) d'un premier nombre de données correspondant au nombre de premières commandes du premier type sauvegardés dans le tableau, auxquelles pour chaque première commande C1 du premier type suit, dans le tableau, une autre première commande C1 du premier type, et d'incrémentation dudit premier nombre d'un nombre égal à un lorsque ledit premier nombre est impair, cette étape étant réalisée à l'aide dudit moyen de contrôle ;
- une étape de comptage (H1) d'un deuxième nombre de données correspondant au nombre de premières commandes du premier type sauvegardés dans le tableau, auxquelles pour chaque première commande C1 du premier type suit, dans le tableau, une deuxième commande C2 du deuxième type, cette étape étant réalisée à l'aide dudit moyen de contrôle ;
- une étape de comparaison (I1) dudit premier nombre audit deuxième nombre, cette étape étant réalisée à l'aide dudit moyen de contrôle ;
- une étape (J1) retournant à l'étape de passage (aa) depuis ladite quatrième chaîne d'étapes vers une cinquième chaîne d'étapes, cette étape étant réalisée à l'aide dudit moyen de contrôle.

Dans le cas d'un troisième nombre prédéterminé de données égal à 10, le tableau peut, selon l'utilisation, être représenté comme suit : [C1, C2, C1, C2, C1, C1, C1, C1, C1, C2].

Le dispositif émetteur 11 a alors identifié davantage de cycle de fonctionnement d'un interrupteur bistable 14 que de cycle de fonctionnement d'un interrupteur monostable 13.

Dans ce cas, le dispositif émetteur 11 passe depuis la au moins quatrième chaîne d'étapes vers la cinquième chaîne d'étapes correspondant à celle d'un interrupteur bistable 14.

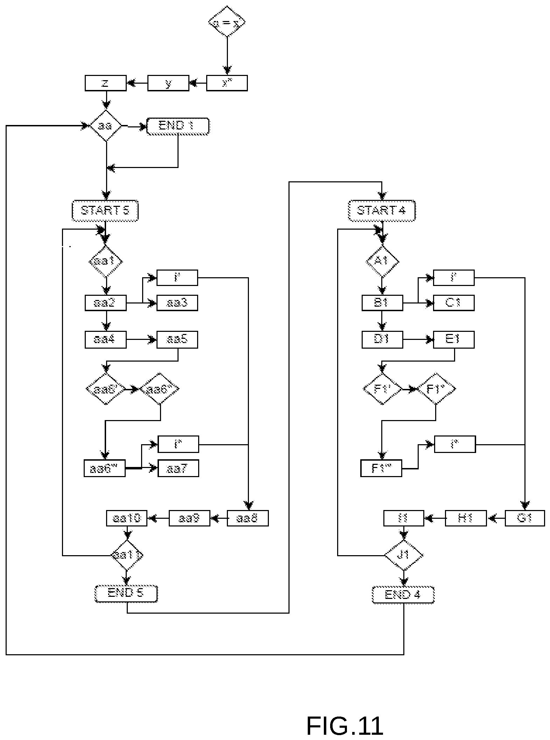

Les figures 5A et 11 représentent les au moins première, quatrième et cinquième chaînes d'étapes. Dans ce mode de réalisation la référence (α) de la figure 5A représente une étape de vérification d'une condition de comptage (x').

La au moins première chaîne d'étapes correspond à celle décrite dans la figure 8, l'étape de comptage (x) est identique à l'étape de comptage (1).

L'étape de comptage (x) est représentée par :
- une étape de vérification d'une condition de comptage (x') identique à l'étape étape de vérification d'une condition de comptage (1') ;
- une étape d'exécution de comptage (x") - à l'étape d'exécution de comptage (1") et étant conditionnée par l'étape de vérification d'une condition de comptage (x').

De plus, la au moins première chaîne d'étapes comprend également, les étapes supplémentaires de comptage (y), de comparaison (z) et de passage (aa) depuis ladite au moins première chaîne d'étapes vers une cinquième chaîne d'étapes, exécutées successivement après l'étape (x").

Les étapes de comptage (x) et (y), de comparaison (z) et de passage (aa) depuis ladite au moins première chaîne d'étapes vers une cinquième chaîne d'étapes permettent de passer depuis cette au moins première chaîne d'étapes vers la cinquième chaîne d'étapes.

Les étapes de comptage (y) et de comparaison (z) sont identiques aux étapes de comptage (m) et de comparaison (n).

La fin de cette au moins première chaîne d'étapes est illustrée par une étape d'exécution END 1 et le début de la cinquième chaîne d'étapes est illustré par une étape d'exécution START 5.

L'étape (aF1) réitérant l'étape de génération (f) est représentée par :
- une première étape de vérification d'une condition de génération (aF1') identique à la première étape de vérification d'une condition de génération (f') ;
- une deuxième étape de vérification d'une condition de génération (aF1") identique à la deuxième étape de vérification d'une condition de génération (f") ;
- une étape d'exécution de génération (aF1''') identique à l'étape d'exécution de génération (f"') et étant conditionnée par les première et deuxième étapes de vérification d'une condition de génération (aF1') et (aF1").

Pour chaque nouvelle utilisation de l'interrupteur, les étapes de comptage (aa8) et (aa9) et de comparaison (aa10) sont exécutées successivement après l'étape (aF1) réitérant l'étape de génération (f).

Le dispositif émetteur 11 restera dans la cinquième chaîne d'étapes tant qu'il n'a pas identifié davantage de cycle de fonctionnement d'un interrupteur monostable 13 que de cycle de fonctionnement d'un interrupteur bistable 14.

Le dispositif émetteur 11 passe depuis la cinquième chaîne d'étapes vers la quatrième chaîne d'étapes lorsqu'il a identifié davantage de cycle de fonctionnement d'un interrupteur monostable 13 que de cycle de fonctionnement d'un interrupteur bistable 14.

La fin de la cinquième chaîne d'étapes est illustrée par une étape d'exécution END 5 et le début de la quatrième chaîne d'étapes est illustré par une étape d'exécution START 4.

L'étape (F1) réitérant l'étape de génération (f) est représentée par :
- une première étape de vérification d'une condition de génération (F1') identique à la première étape de vérification d'une condition de génération (f') ;
- une deuxième étape de vérification d'une condition de génération (F1") identique à la deuxième étape de vérification d'une condition de génération (f") ;
- une étape d'exécution de génération (F1''') identique à l'étape d'exécution de génération (f''') et étant conditionnée par les première et deuxième étapes de vérification d'une condition de génération (F1') et (F1").

Pour chaque nouvelle utilisation de l'interrupteur, les étapes de comptage (G1) et (111) et de comparaison (I1) sont exécutées successivement après l'étape (F1) réitérant l'étape de génération (f).

Les étapes de comptage (H1) et de comparaison (I1) sont identiques aux étapes de comptage (m) et de comparaison (n).

Le dispositif émetteur 11 restera dans la quatrième chaîne d'étapes tant qu'il n'a pas identifié davantage de cycle de fonctionnement d'un interrupteur bistable 14 que de cycle de fonctionnement d'un interrupteur monostable 13.

Le dispositif émetteur 11 passe depuis la quatrième chaîne d'étapes vers la cinquième chaîne d'étapes lorsqu'il a identifié davantage de cycle de fonctionnement d'un interrupteur bistable 14 que de cycle de fonctionnement d'un interrupteur monostable 13.

La fin de la quatrième chaîne d'étapes est illustrée par une étape d'exécution END 4 et le début de la cinquième chaîne d'étapes est illustré par l'étape d'exécution START 5.

On a représenté après de passage (aa11) depuis ladite cinquième chaîne d'étapes vers une quatrième chaîne d'étapes une première boucle de retour vers l'étape (aa1). Cette première boucle représente la répétition de la cinquième chaîne d'étapes jusqu'à la validation de cette étape (aa11).

En outre, on a représenté après l'étape (J1) retournant à l'étape de passage (aa) depuis ladite quatrième chaîne d'étapes vers une cinquième chaîne d'étapes une première boucle de retour vers l'étape (A1) réitérant l'étape de détection (a). Cette deuxième boucle représente la répétition de la quatrième chaîne d'étapes jusqu'à la validation de cette étape (J1).

On a également représenté après l'étape de vérification d'une condition de comptage (x') une troisième boucle de retour vers l'étape de détection (a). Cette troisième boucle représente la répétition de cette au moins première chaîne d'étapes jusqu'à la validation de cette étape (x').

Selon un mode particulier de l'invention, le procédé comprend en outre, suite à au moins une des première (c) ou deuxième (g) étapes d'émission :
- une étape de réception de la première commande C1 et/ou de la deuxième commande C2, cette étape étant réalisée à l'aide d'un moyen de réception dudit dispositif récepteur 15 ;
- une étape de changement de l'état du deuxième circuit 16 d'un état fermé à un état ouvert ou d'un état ouvert á un état fermé, cette étape étant réalisée depuis ledit dispositif récepteur 15.

Grace à ces étapes, il est possible de commander depuis le dispositif émetteur 11 l'ouverture ou la fermeture du deuxième circuit 16 sur lequel peut être relié un moyen d'éclairage 17.

Selon un mode particulier de l'invention, le procédé comprend en outre :
- une étape d'émission, dans un intervalle de temps prédéterminé, d'une information correspondant à l'état ouvert ou fermé du deuxième circuit 16, cette étape étant réalisée à l'aide d'un moyen d'émission dudit dispositif récepteur 15.

Préférentiellement, cet intervalle de temps est compris entre 500 millisecondes et 1 seconde.

Grace à cette étape d'émission, le dispositif émetteur 11 connaît l'état ouvert ou fermé du deuxième circuit 16 relié au dispositif récepteur 15.

De cette façon, lorsque le dispositif émetteur 11 doit émettre une première ou deuxième commande C1, C2 en vue d'ouvrir ou de fermer le deuxième circuit 16, si le deuxième circuit 16 est déjà ouvert ou fermé, le dispositif émetteur 11 émettra ou n'émettra pas la première ou deuxième commande C1, C2. Ceci afin de permettre une utilisation synchronisée du dispositif émetteur 11 avec le dispositif récepteur 15.

Selon un mode particulier de l'invention, le procédé comprend en outre, successivement :
- une étape de suppression (bb) du tableau de données et/ou des données du tableau de données au moyen d'un moyen de réinitialisation dudit dispositif émetteur 11 ;
- une étape de passage (cc) depuis l'une quelconque des au moins première, deuxième, troisième, quatrième ou cinquième chaînes d'étapes vers la au moins première chaîne d'étapes au moyen du moyen de contrôle.

Grace à ces étapes, il est possible de réinitialiser le dispositif émetteur 11 dans la au moins première chaîne d'étape tel que définie par la revendication 1 de l'invention, ceci selon les besoins de l'utilisateur.

L'invention concerne également un dispositif émetteur 11 pour la mise en œuvre du procédé selon au moins l'une quelconque des revendications précédentes, comprenant :
- un moyen d'alimentation apte à être électriquement relié une source d'alimentation ;
- un moyen de connexion apte à être électriquement relié en série à un premier circuit 12 électrique comprenant un interrupteur monostable 13 ou un interrupteur bistable 14 permettant de changer l'état dudit premier circuit 12 d'un état ouvert O à un état fermé F et vice-versa ;
- un moyen d'émission permettant d'émettre une première commande C1 et/ou une deuxième commande C2 depuis le dispositif émetteur 11 vers le dispositif récepteur 15 ;
caractérisé en ce que ledit dispositif émetteur 11 comprend en outre :
- un moyen de détection permettant de détecter l'état ouvert et/ou fermé dudit deuxième circuit 16 ;
- un moyen de contrôle permettant de réaliser les étapes liées à ce dit moyen de contrôle.

Selon un autre mode de réalisation préféré, le dispositif émetteur 11 comprend en outre, un moyen de mémoire permettant de créer un tableau de données pour sauvegarder, successivement dans le tableau, pour chaque génération de ladite première commande C1 et pour chaque génération de ladite deuxième commande C2, une donnée caractérisant le type de commande généré, c'est-à-dire soit du premier type, soit du deuxième type.

Selon un autre mode de réalisation préféré, le dispositif émetteur 11 comprend en outre, un moyen de réinitialisation permettant de supprimer le tableau de données et/ou les données du tableau de données.

Selon un autre mode de réalisation préféré, le dispositif émetteur 11 comprend en outre un moyen de réception pour recevoir une information émise par le dispositif récepteur 15, ladite information correspondant à l'état ouvert ou fermé du deuxième circuit 16.

Selon un autre mode de réalisation préféré, le dispositif émetteur 11 est alimenté par la phase et le neutre de l'interrupteur auquel il est relié.

Selon un autre mode de réalisation préféré, le dispositif émetteur 11 est alimenté par une source d'alimentation autonome (non représentée) de type pile d'alimentation.

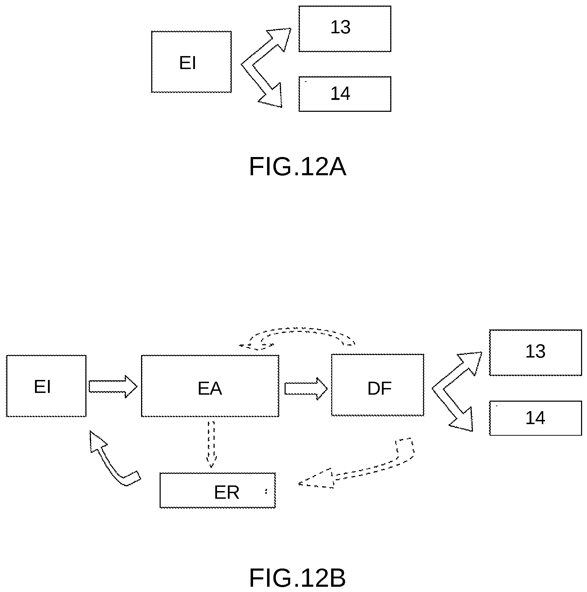

Sur figure 12A, on a représenté l'état initial EI du dispositif émetteur 11. Cet état initial EI correspond à la au moins première chaîne d'étapes selon l'invention. A partir de cette état initial EI il est possible d'identifier un interrupteur monostable 13 ou un interrupteur bistable 14.

Sur figure 12B, on a aussi représenté l'état initial EI du dispositif émetteur 11. On a également représenté l'état d'apprentissage EA du dispositif émetteur 11. Cette état d'apprentissage EA permet au dispositif émetteur 11 de prendre une décision finale DF permettant de passer depuis une première chaîne d'étapes vers l'une quelconque des deuxième, troisième, quatrième ou cinquième chaîne d'étapes correspondant un interrupteur monostable 13 ou à un interrupteur bistable 14. Cette décision finale DF peut être remise en question grâce l'une des quatrième ou cinquième chaîne d'étapes. En outre, on a représenté l'état de réinitialisation ER qui permet de passer depuis l'une quelconque des chaînes d'étapes vers l'état initial EI.

Bien entendu, l'invention n'est pas limitée aux modes de réalisation décrit et représenté aux dessins annexés. En particulier, l'homme du métier pourra parvenir à l'invention en utilisation d'autres tableaux de données et/ou en utilisant les première et deuxième données C1, C2 de façon différentes pour identifier les utilisations d'un interrupteur monostable 13 ou bistable 14 relié au dispositif émetteur 11 par l'utilisateur. Des modifications restent possibles, notamment du point de vue de la constitution des divers éléments ou par substitution d'équivalents techniques, sans sortir pour autant du domaine de protection de l'invention.

## Revendications

1. Procédé de pilotage d'une installation domotique (10) comprenant :
- au moins un dispositif émetteur (11) comprenant :
- un moyen de détection,
- un moyen de contrôle,
- un moyen d'émission,
ledit dispositif émetteur (11) étant apte à être électriquement relié en série à un premier circuit (12) électrique comprenant un interrupteur monostable (13) ou un interrupteur bistable (14) permettant de changer l'état dudit premier circuit (12) d'un état ouvert (O) à un état fermé (F) et vice-versa,
ledit dispositif émetteur (11) étant apte à fonctionner dans une première chaîne d'étapes et étant apte à détecter le changement d'état dudit premier circuit (12) de l'état ouvert (O) à l'état fermé (F) et vice-versa,
- au moins un dispositif récepteur (15) apte à être électriquement relié en série, à l'aide d'un moyen de connexion, à un deuxième circuit (16) électrique comprenant au moins un consommateur électrique,
le procédé comprenant au moins une première chaîne d'étapes comprenant :
- une étape de détection (a) d'un changement de l'état ouvert (O) à l'état fermé (F) dudit premier circuit (12), cette étape étant réalisée à l'aide dudit moyen de détection ;
- une étape de génération (b) d'une première commande (C1) d'un premier type, cette étape étant réalisée à l'aide dudit moyen de contrôle ;
- une étape d'émission (c) de la première commande (C1) depuis le dispositif émetteur (11) vers le dispositif récepteur (15), cette étape étant réalisée à l'aide dudit moyen d'émission ;
le procédé étant **caractérisé en ce que** la première chaîne d'étapes comprend en outre :
- une étape de mesure (d) dans le temps d'une durée variable (T0) pendant laquelle ledit premier circuit (12) est dans son état fermé (F), cette étape étant réalisée à l'aide dudit moyen de contrôle ;
- une étape de comparaison (e) de ladite durée variable (T0) à une durée fixe prédéterminée (T1), cette étape étant réalisée à l'aide dudit moyen de contrôle ;
- une étape de génération (f) d'une deuxième commande (C2) d'un deuxième type lorsque la durée variable (T0) est supérieure ou égale à ladite durée fixe prédéterminée (T1) et lorsqu'un changement de l'état fermé (F) à l'état ouvert (O) dudit premier circuit (12) est détecté, cette étape étant réalisée à l'aide dudit moyen de contrôle ;
- une étape d'émission (g) de la deuxième commande (C2) depuis le dispositif émetteur (11) vers le dispositif récepteur (15), cette étape étant réalisée à l'aide dudit moyen d'émission ;
- une étape de création (h) d'un tableau de données dans une mémoire, cette étape étant réalisée à l'aide d'un moyen de mémoire dudit dispositif émetteur (11) préalablement à l'étape de détection (a) et ;
- une étape de sauvegarde (i) successivement dans le tableau, pour chaque génération de ladite première commande (C1) et pour chaque génération de ladite deuxième commande (C2), d'une donnée caractérisant le type de commande généré, c'est-à-dire soit du premier type, soit du deuxième type, cette étape étant réalisée à l'aide dudit moyen de mémoire.

2. Procédé selon la revendication 1, **caractérisé en ce que** :
- dans l'étape d'émission (c) de la première commande, la première commande (C1) est émise par le biais d'un signal radiofréquence ; et/ou
- dans l'étape d'émission (g) de la deuxième commande, la deuxième commande (C2) est émise par le biais d'un signal radiofréquence.

3. Procédé selon l'une quelconque des revendications 1 ou 2, **caractérisé en ce qu'**il comprend en outre, à la suite de l'étape de sauvegarde (i), successivement :
- une étape de passage (j) depuis ladite au moins première chaîne d'étapes vers une deuxième chaîne d'étapes lorsqu'un premier nombre prédéterminé de données sauvegardées dans le tableau, correspondant chacune, successivement, à une première commande (C1), est atteint, l'étape de passage (j) étant réalisée à l'aide du moyen de contrôle, ladite deuxième chaîne d'étapes comprenant :
- une étape (j1) réitérant l'étape de détection (a) d'un changement de l'état ouvert (O) à l'état fermé (F) dudit premier circuit (12), cette étape étant réalisée à l'aide dudit moyen de détection ;
- une étape (j2) réitérant l'étape de génération (b) d'une première commande (C1), cette étape étant réalisée à l'aide dudit moyen de contrôle ;
- une étape (j3) réitérant l'étape d'émission (c) de la première commande (C1) depuis le dispositif émetteur (11) vers le dispositif récepteur (15), cette étape étant réalisée à l'aide dudit moyen d'émission.

4. Procédé selon l'une des revendications 1 ou 2, **caractérisé en ce qu'**il comprend en outre, à la suite de l'étape de sauvegarde (i), successivement :
- une étape de passage (k) depuis ladite au moins première chaîne d'étapes vers une troisième chaîne d'étapes lorsqu'un deuxième nombre prédéterminé de données sauvegardées dans le tableau, correspondant à une combinaison successive de première commande (C1) et de deuxième commande (C2), est atteint, l'étape de passage (k) étant réalisée à l'aide du moyen de contrôle, ladite troisième chaîne d'étapes comprenant :
- une étape (k1) réitérant l'étape de détection (a) d'un changement de l'état ouvert (O) à l'état fermé (F) dudit premier circuit (12), cette étape étant réalisée à l'aide dudit moyen de détection ;
- une étape (k2) réitérant l'étape de génération (b) d'une première commande (C1), cette étape étant réalisée à l'aide dudit moyen de contrôle ;
- une étape (k3) réitérant l'étape d'émission (c) de la première commande (C1) depuis le dispositif émetteur (11) vers le dispositif récepteur (15), cette étape étant réalisée à l'aide dudit moyen d'émission ;
- une étape (k4) réitérant l'étape de mesure (d) dans le temps d'une durée variable (T0) pendant laquelle ledit premier circuit (12) est dans son état fermé (F), cette étape étant réalisée à l'aide dudit moyen de contrôle ;
- une étape de détection (k5) d'un changement de l'état fermé (F) à l'état ouvert (O) dudit premier circuit (12), cette étape étant réalisée à l'aide dudit moyen de détection ;
- une étape de génération (k6) d'une deuxième commande (C2), cette étape étant réalisée à l'aide dudit moyen de contrôle ;
- une étape (k7) réitérant l'étape d'émission (g) de la deuxième commande (C2) depuis le dispositif émetteur (11) vers le dispositif récepteur (15), cette étape étant réalisée à l'aide dudit moyen d'émission.

5. Procédé selon l'une quelconque des revendications 1, 2 ou 4, **caractérisé en ce qu'**il comprend en outre, à la suite de l'étape de sauvegarde (i), successivement :
- une étape de comptage (1) d'un premier nombre de données correspondant au nombre de premières commandes (C1) sauvegardées dans le tableau, auxquelles pour chaque première commande (C1) suit dans le tableau une autre première commande (C1), et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (m) d'un deuxième nombre de données correspondant au nombre de premières commandes (C1) sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (n) dudit premier nombre audit deuxième nombre, cette étape étant réalisée à l'aide dudit moyen de contrôle ;
- une étape de passage (o) depuis ladite au moins première chaîne d'étapes vers une deuxième chaîne d'étapes lorsque ledit premier nombre est strictement supérieur au double dudit deuxième nombre, l'étape de passage (o) étant réalisée à l'aide du moyen de contrôle, ladite deuxième chaîne d'étapes comprenant :
- une étape (o1) réitérant l'étape de détection (a) d'un changement de l'état ouvert (O) à l'état fermé (F) dudit premier circuit (12), cette étape étant réalisée à l'aide dudit moyen de détection ;
- une étape (o2) réitérant l'étape de génération (b) d'une première commande (C1), cette étape étant réalisée à l'aide dudit moyen de contrôle ;
- une étape (o3) réitérant l'étape d'émission (c) de la première commande (C1) depuis le dispositif émetteur (11) vers le dispositif récepteur (15), cette étape étant réalisée à l'aide dudit moyen d'émission.

6. Procédé selon l'une quelconque des revendications 1 à 3, **caractérisé en ce qu'**il comprend en outre, à la suite de l'étape de sauvegarde (i), successivement :
- une étape de comptage (p) d'un premier nombre de données correspondant au nombre de premières commandes (C1) sauvegardées dans le tableau, auxquelles pour chaque première commande (C1) suit dans le tableau une autre première commande (C1), et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (q) d'un deuxième nombre de données correspondant au nombre de premières commandes du premier type sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (r) dudit premier nombre audit deuxième nombre, cette étape étant réalisée à l'aide dudit moyen de contrôle ;
- une étape de passage (s) depuis ladite au moins première chaîne d'étapes vers une troisième chaîne d'étapes lorsque le double dudit deuxième nombre est strictement supérieur audit premier nombre, cette étape étant réalisée à l'aide du moyen de contrôle, ladite troisième chaîne d'étapes comprenant :
- une étape (s1) réitérant l'étape de détection (a) d'un changement de l'état ouvert (O) à l'état fermé (F) dudit premier circuit (12), cette étape étant réalisée à l'aide dudit moyen de détection ;
- une étape (s2) réitérant l'étape de génération (b) d'une première commande (C1), cette étape étant réalisée à l'aide dudit moyen de contrôle ;
- une étape (s3) réitérant l'étape d'émission (c) de la première commande (C1) depuis le dispositif émetteur (11) vers le dispositif récepteur (15), cette étape étant réalisée à l'aide dudit moyen d'émission ;
- une étape (s4) réitérant l'étape de mesure (d) dans le temps d'une durée variable (T0) pendant laquelle ledit premier circuit (12) est dans son état fermé (F), cette étape étant réalisée à l'aide dudit moyen de contrôle ;
- une étape de détection (s5) d'un changement de l'état fermé (F) à l'état ouvert (O) dudit premier circuit (12), cette étape étant réalisée à l'aide dudit moyen de détection ;
- une étape de génération (s6) d'une deuxième commande (C2), cette étape étant réalisée à l'aide dudit moyen de contrôle ;
- une étape (s7) réitérant l'étape d'émission (g) de la deuxième commande (C2) depuis le dispositif émetteur (11) vers le dispositif récepteur (15), cette étape étant réalisée à l'aide dudit moyen d'émission.

7. Procédé selon l'une quelconque des revendications 1 à 6, **caractérisé en ce qu'**il comprend en outre, à la suite de l'étape de sauvegarde (i), successivement :
- une étape de comptage (t) d'un premier nombre de données correspondant au nombre de premières commandes (C1) sauvegardées dans le tableau, auxquelles pour chaque première commande (C1) suit dans le tableau une autre première commande (C1), et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (u) d'un deuxième nombre de données correspondant au nombre de premières commandes (C1) sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (v) dudit premier nombre audit deuxième nombre, cette étape étant réalisée à l'aide dudit moyen de contrôle ;
- une étape de passage (w) depuis ladite au moins première chaîne d'étapes vers une quatrième chaîne d'étapes lorsque ledit premier nombre est strictement supérieur au double dudit deuxième nombre, cette étape étant réalisée à l'aide du moyen de contrôle, ladite quatrième chaîne d'étapes comprenant :
- une étape (w1) réitérant l'étape de détection (a) d'un changement de l'état ouvert (O) à l'état fermé (F) dudit premier circuit (12), cette étape étant réalisée à l'aide dudit moyen de détection ;
- une étape (w2) réitérant l'étape de génération (b) d'une première commande (C1), cette étape étant réalisée à l'aide dudit moyen de contrôle ;
- une étape (w3) réitérant l'étape d'émission (c) de la première commande (C1) depuis le dispositif émetteur (11) vers le dispositif récepteur (15), cette étape étant réalisée à l'aide dudit moyen d'émission ;
- une étape (w4) réitérant l'étape de mesure (d) dans le temps d'une durée variable (T0) pendant laquelle ledit premier circuit (12) est dans son état fermé (F), cette étape étant réalisée à l'aide dudit moyen de contrôle ;
- une étape (w5) réitérant l'étape de comparaison (e) de ladite durée variable (T0) à une durée fixe prédéterminée (T1), cette étape étant réalisée à l'aide dudit moyen de contrôle ;
- une étape (w6) réitérant l'étape de génération (f) d'une deuxième commande (C2) lorsque la durée variable (T0) est supérieure ou égale à ladite durée fixe prédéterminée (T1) et lorsqu'un changement de l'état fermé (F) à l'état ouvert (O) dudit premier circuit (12) est détecté, cette étape étant réalisée à l'aide dudit moyen de contrôle ;
- une étape de comptage (w7) d'un premier nombre de données correspondant au nombre de premières commandes (C1) sauvegardées dans le tableau, auxquelles pour chaque première commande (C1) suit, dans le tableau, une autre première commande (C1), et d'incrémentation dudit premier nombre d'un nombre égal à un lorsque ledit premier nombre est impair, cette étape étant réalisée à l'aide dudit moyen de contrôle ;
- une étape de comptage (w8) d'un deuxième nombre de données correspondant au nombre de premières commandes (C1) sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (w9) dudit premier nombre audit deuxième nombre, cette étape étant réalisée à l'aide dudit moyen de contrôle ;
- une étape de passage (w10) depuis ladite quatrième chaîne d'étapes vers une cinquième chaîne d'étapes lorsque le double dudit deuxième nombre est strictement supérieur audit premier nombre, cette étape étant réalisée à l'aide du moyen de contrôle, ladite cinquième chaîne d'étapes comprenant :
- une étape (A) réitérant l'étape de détection (a) d'un changement de l'état ouvert (O) à l'état fermé (F) dudit premier circuit (12), cette étape étant réalisée à l'aide dudit moyen de détection ;
- une étape (B) réitérant l'étape de génération (b) d'une première commande (C1), cette étape étant réalisée à l'aide dudit moyen de contrôle ;
- une étape (C) réitérant l'étape d'émission (c) de la première commande (C1) depuis le dispositif émetteur (11) vers le dispositif récepteur (15), cette étape étant réalisée à l'aide dudit moyen d'émission ;
- une étape (D) réitérant l'étape de mesure (d) dans le temps d'une durée variable (T0) pendant laquelle ledit premier circuit (12) est dans son état fermé (F), cette étape étant réalisée à l'aide dudit moyen de contrôle ;
- une étape (E) réitérant l'étape de comparaison (e) de ladite durée variable (T0) à une durée fixe prédéterminée (T1), cette étape étant réalisée à l'aide dudit moyen de contrôle ;
- une étape (F) réitérant l'étape de génération (f) d'une deuxième commande (C2) lorsque la durée variable (T0) est supérieure ou égale à ladite durée fixe prédéterminée (T1) et lorsqu'un changement de l'état fermé (F) à l'état ouvert (O) dudit premier circuit (12) est détecté, cette étape étant réalisée à l'aide dudit moyen de contrôle ;
- une étape (G) réitérant l'étape d'émission (g) de la deuxième commande (C2) depuis le dispositif émetteur (11) vers le dispositif récepteur (15), cette étape étant réalisée à l'aide dudit moyen d'émission ;
- une étape de comptage (H) d'un premier nombre de données correspondant au nombre de premières commandes (C1) sauvegardées dans le tableau, auxquelles pour chaque première commande (C1) suit, dans le tableau, une autre première commande (C1), et d'incrémentation dudit premier nombre d'un nombre égal à un lorsque ledit premier nombre est impair, cette étape étant réalisée à l'aide dudit moyen de contrôle ;
- une étape de comptage (I) d'un deuxième nombre de données correspondant au nombre de premières commandes (C1) sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (J) dudit premier nombre audit deuxième nombre, cette étape étant réalisée à l'aide dudit moyen de contrôle ;
- une étape (K) retournant à l'étape de passage (w) lorsque le dispositif émetteur a identifié plus de cycles de fonctionnement d'un interrupteur monostable (13) que de cycles de fonctionnement d'un interrupteur bistable (14), cette étape étant réalisée à l'aide dudit moyen de contrôle.

8. Procédé selon l'une quelconque des revendications 1 à 6, **caractérisé en ce qu'**il comprend en outre, à la suite de l'étape de sauvegarde (i), successivement :
- une étape de comptage (x) d'un premier nombre de données correspondant au nombre de premières commandes (C1) sauvegardées dans le tableau, auxquelles pour chaque première commande (C1) suit dans le tableau une autre première commande (C1), et d'incrémentation dudit premier nombre d'un nombre égal à un lorsque ledit premier nombre est impair, cette étape est réalisée à l'aide dudit moyen de contrôle lorsqu'un troisième nombre prédéterminé de données sauvegardées dans le tableau est atteint ;
- une étape de comptage (y) d'un deuxième nombre de données correspondant au nombre de premières commandes (C1) sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (z) dudit premier nombre audit deuxième nombre, cette étape étant réalisée à l'aide dudit moyen de contrôle ;
- une étape de passage (aa) depuis ladite au moins première chaîne d'étapes vers une cinquième chaîne d'étapes lorsque le double dudit deuxième nombre est strictement supérieur audit premier nombre, cette étape étant réalisée à l'aide du moyen de contrôle, ladite cinquième chaîne d'étapes comprenant :
- une étape (aa1) réitérant l'étape de détection (a) d'un changement de l'état ouvert (O) à l'état fermé (F) dudit premier circuit (12), cette étape étant réalisée à l'aide dudit moyen de détection ;
- une étape (aa2) réitérant l'étape de génération (b) d'une première commande (C1), cette étape étant réalisée à l'aide dudit moyen de contrôle ;
- une étape (aa3) réitérant l'étape d'émission (c) de la première commande (C1) depuis le dispositif émetteur (11) vers le dispositif récepteur (15), cette étape étant réalisée à l'aide dudit moyen d'émission ;
- une étape (aa4) réitérant l'étape de mesure (d) dans le temps d'une durée variable (T0) pendant laquelle ledit premier circuit (12) est dans son état fermé (F), cette étape étant réalisée à l'aide dudit moyen de contrôle ;
- une étape (aa5) réitérant l'étape de comparaison (e) de ladite durée variable (T0) à une durée fixe prédéterminée (T1), cette étape étant réalisée à l'aide dudit moyen de contrôle ;
- une étape (aa6) réitérant l'étape de génération (f) d'une deuxième commande (C2) lorsque la durée variable (T0) est supérieure ou égale à ladite durée fixe prédéterminée (T1) et lorsqu'un changement de l'état fermé (F) à l'état ouvert (O) dudit premier circuit (12) est détecté, cette étape étant réalisée à l'aide dudit moyen de contrôle ;
- une étape (aa7) réitérant l'étape d'émission (g) de la deuxième commande (C2) depuis le dispositif émetteur (11) vers le dispositif récepteur (15), cette étape étant réalisée à l'aide dudit moyen d'émission ;
- une étape de comptage (aa8) d'un premier nombre de données correspondant au nombre de premières commandes (C1) sauvegardées dans le tableau, auxquelles pour chaque première commande (C1) suit, dans le tableau, une autre première commande (C1), et d'incrémentation dudit premier nombre d'un nombre égal à un lorsque ledit premier nombre est impair, cette étape étant réalisée à l'aide dudit moyen de contrôle ;
- une étape de comptage (aa9) d'un deuxième nombre de données correspondant au nombre de premières commandes (C1) sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (aa10) dudit premier nombre audit deuxième nombre, cette étape étant réalisée à l'aide dudit moyen de contrôle ;
- une étape de passage (aa(11)) depuis ladite cinquième chaîne d'étapes vers une quatrième chaîne d'étapes lorsque ledit premier nombre est strictement supérieur au double dudit deuxième nombre, cette étape étant réalisée à l'aide du moyen de contrôle, ladite quatrième chaîne d'étapes comprenant :
- une étape (A1) réitérant l'étape de détection (a) d'un changement de l'état ouvert (O) à l'état fermé (F) dudit premier circuit (12), cette étape étant réalisée à l'aide dudit moyen de détection ;
- une étape (B1) réitérant l'étape de génération (b) d'une première commande (C1), cette étape étant réalisée à l'aide dudit moyen de contrôle ;
- une étape (C1) réitérant l'étape d'émission (c) de la première commande (C1) depuis le dispositif émetteur (11) vers le dispositif récepteur (15), cette étape étant réalisée à l'aide dudit moyen d'émission ;
- une étape (D1) réitérant l'étape de mesure (d) dans le temps d'une durée variable (T0) pendant laquelle ledit premier circuit (12) est dans son état fermé (F), cette étape étant réalisée à l'aide dudit moyen de contrôle ;
- une étape (E1) réitérant l'étape de comparaison (e) de ladite durée variable (T0) à une durée fixe prédéterminée (T1), cette étape étant réalisée à l'aide dudit moyen de contrôle ;
- une étape (F1) réitérant l'étape de génération (f) d'une deuxième commande (C2) lorsque la durée variable (T0) est supérieure ou égale à ladite durée fixe prédéterminée (T1) et lorsqu'un changement de l'état fermé (F) à l'état ouvert (O) dudit premier circuit (12) est détecté, cette étape étant réalisée à l'aide dudit moyen de contrôle ;
- une étape de comptage (G1) d'un premier nombre de données correspondant au nombre de premières commandes (C1) sauvegardées dans le tableau, auxquelles pour chaque première commande (C1) suit, dans le tableau, une autre première commande (C1), et d'incrémentation dudit premier nombre d'un nombre égal à un lorsque ledit premier nombre est impair, cette étape étant réalisée à l'aide dudit moyen de contrôle ;
- une étape de comptage (H1) d'un deuxième nombre de données correspondant au nombre de premières commandes (C1) sauvegardées dans le tableau, auxquelles pour chaque première commande (C1) suit, dans le tableau, une deuxième commande (C2), cette étape étant réalisée à l'aide dudit moyen de contrôle ;
- une étape de comparaison (I1) dudit premier nombre audit deuxième nombre, cette étape étant réalisée à l'aide dudit moyen de contrôle ;
- une étape (J1) retournant à l'étape de passage (aa) depuis ladite quatrième chaîne d'étapes vers ladite cinquième chaîne d'étapes lorsque le dispositif émetteur (11) a identifié plus de cycles de fonctionnement d'un interrupteur bistable (14) que de cycles de fonctionnement d'un interrupteur monostable (13), cette étape étant réalisée à l'aide dudit moyen de contrôle.

9. Procédé selon l'une quelconque des revendications 1 à 8, **caractérisé en ce qu'**il comprend en outre, successivement :
- une étape de suppression (bb) du tableau de données et/ou des données du tableau de données au moyen d'un moyen de réinitialisation dudit dispositif émetteur (11) ;
- une étape de passage (cc) depuis l'une quelconque des au moins première, deuxième, troisième, quatrième ou cinquième chaînes d'étapes vers la au moins première chaîne d'étapes au moyen du moyen de contrôle.

10. Procédé selon l'une quelconque des revendications 1 à 9, **caractérisé en ce qu'**il comprend en outre, suite à au moins une des étapes d'émission (c, g) de la première commande (C1) ou de la deuxième commande (C2) :
- une étape de réception de la première commande (C1) et/ou de la deuxième commande (C2), cette étape étant réalisée à l'aide d'un moyen de réception dudit dispositif récepteur (15) ;
- une étape de changement de l'état du deuxième circuit (16) d'un état fermé à un état ouvert ou d'un état ouvert á un état fermé, cette étape étant réalisée depuis ledit dispositif récepteur (15).

11. Procédé selon l'une quelconque des revendications 1 à 10, **caractérisé en ce qu'**il comprend en outre :
- une étape d'émission, dans un intervalle de temps prédéterminé, d'une information correspondant à l'état ouvert ou fermé du deuxième circuit (16), cette étape étant réalisée à l'aide d'un moyen d'émission dudit dispositif récepteur (15).

12. Dispositif émetteur (11) pour la mise en œuvre du procédé selon au moins l'une quelconque des revendications 1 à 9, comprenant :
- un moyen d'alimentation apte à être électriquement relié une source d'alimentation ;
- un moyen de connexion apte à être électriquement relié en série à un premier circuit (12) électrique comprenant un interrupteur monostable (13) ou un interrupteur bistable (14) permettant de changer l'état dudit premier circuit (12) d'un état ouvert (O) à un état fermé (F) et vice-versa ;
- un moyen d'émission permettant d'émettre une première commande (C1) et une deuxième commande (C2) depuis le dispositif émetteur (11) vers le dispositif récepteur (15) ;
**caractérisé en ce que** ledit dispositif émetteur (11) comprend en outre :
- un moyen de détection permettant de détecter l'état ouvert et/ou fermé dudit premier circuit (12) ;
- un moyen de contrôle permettant de réaliser les étapes définies aux revendications 1 à 9 et étant liées à ce dit moyen de contrôle ;
ledit dispositif émetteur (11) comprenant en outre, un moyen de mémoire permettant de créer un tableau de données pour sauvegarder, successivement dans le tableau, pour chaque génération de ladite première commande (C1) et pour chaque génération de ladite deuxième commande (C2), une donnée caractérisant le type de commande généré, c'est-à-dire soit du premier type, soit du deuxième type.

13. Dispositif émetteur (11) selon la revendication 12, **caractérisé en ce qu'**il comprend en outre, un moyen de réinitialisation permettant de supprimer le tableau de données et/ou les données du tableau de données.

14. Installation domotique (10) pour la mise en œuvre du procédé selon au moins l'une quelconque des revendications 10 ou 11, comprenant un dispositif émetteur (11) selon l'un quelconque des revendications 12 ou 13, **caractérisé en ce qu'**il comprend en outre un dispositif récepteur (12) pourvu d'un moyen de réception pour recevoir une information émise par le dispositif récepteur (15), ladite information correspondant à l'état ouvert ou fermé du deuxième circuit (16).

## Patentansprüche

1. Verfahren zur Steuerung einer Heimautomatisierungsanlage (10), umfassend:
- mindestens eine Sendevorrichtung (11), umfassend:
- ein Detektionsmittel,
- ein Steuermittel,
- ein Sendemittel,
wobei die genannte Sendevorrichtung (11) geeignet ist, mit einem ersten elektrischen Stromkreis (12) elektrisch in Reihe geschaltet zu werden, der einen monostabilen Schalter (13) oder einen bistabilen Schalter (14) aufweist, der erlaubt, den Zustand des genannten ersten Schaltkreises (12) von einem offenen Zustand (O) in einen geschlossenen Zustand (F) und umgekehrt zu ändern, wobei die genannte Sendevorrichtung (11) geeignet ist, in einer ersten Schrittfolge zu arbeiten, und geeignet ist, die Änderung des Zustandes des genannten ersten Schaltkreises (12) vom offenen Zustand (O) in den geschlossenen Zustand (F) und umgekehrt festzustellen,
- mindestens eine Empfangsvorrichtung (15), geeignet, mit Hilfe eines Anschlussmittels mit einem zweiten elektrischen Stromkreis (16) elektrisch in Reihe geschaltet zu werden, der mindestens einen Stromverbraucher umfasst,
wobei das Verfahren mindestens eine erste Schrittfolge umfasst, umfassend:
- einen Schritt der Detektion (a) einer Änderung des Zustandes des genannten ersten Schaltkreises (12) vom offenen Zustand (O) in den geschlossenen Zustand (F), wobei dieser Schritt mit Hilfe des genannten Detektionsmittels erfolgt,
- einen Schritt der Erzeugung (b) eines ersten Befehls (C1) einer ersten Art, wobei dieser Schritt mit Hilfe des genannten Steuermittels erfolgt,
- einen Schritt der Sendung (c) des ersten Befehls (C1) von der Sendevorrichtung (11) zur Empfangsvorrichtung (15), wobei dieser Schritt mit Hilfe des genannten Sendemittels erfolgt,
wobei das Verfahren **dadurch gekennzeichnet ist, dass** die erste Schrittfolge außerdem umfasst:
- einen Schritt der Zeitmessung (d) einer veränderlichen Dauer (T0), während derer der genannte erste Schaltkreis (12) im geschlossenen Zustand (F) ist, wobei dieser Schritt mit Hilfe des genannten Steuermittels erfolgt,
- einen Schritt des Vergleichs (e) der genannten veränderlichen Dauer (T0) mit einer vorbestimmten festen Dauer (T1), wobei dieser Schritt mit Hilfe des genannten Steuermittels erfolgt,
- einen Schritt der Erzeugung (f) eines zweiten Befehls (C2) einer zweiten Art, wenn die veränderliche Dauer (T0) größer oder gleich der genannten festgesetzten festen Dauer (T1) ist und wenn eine Änderung des Zustandes des genannten ersten Schaltkreises (12) vom geschlossenen Zustand (F) in den offenen Zustand (O) festgestellt wurde, wobei dieser Schritt mit Hilfe des genannten Steuermittels erfolgt,
- einen Schritt der Sendung (g) des zweiten Befehls (C2) von der Sendevorrichtung (11) zur Empfangsvorrichtung (15), wobei dieser Schritt mit Hilfe des genannten Sendemittels erfolgt,
- einen Schritt der Erstellung (h) einer Datentabelle in einem Speicher, wobei dieser Schritt mit Hilfe eines Speichermittels der genannten Sendevorrichtung (11) vor dem Detektionsschritt (a) ausgeführt wird, und
- einen Schritt der aufeinanderfolgenden Sicherung (i) in der Tabelle, bei jeder Erzeugung des genannten ersten Befehls (C1) und bei jeder Erzeugung des genannten zweiten Befehls (C2), einer Information, die die Art des erzeugten Befehls kennzeichnet, d.h. entweder der ersten Art oder der zweiten Art, wobei dieser Schritt mit Hilfe des genannten Speichermittels erfolgt.

2. Verfahren nach Patentanspruch 1, **dadurch gekennzeichnet, dass**
- der erste Befehl (C1) im Schritt der Sendung (c) des ersten Befehls auf ein Funksignal hin gesendet wird; und/oder
- der zweite Befehl (C2) im Schritt der Sendung (g) des zweiten Befehls auf ein Funksignal hin gesendet wird.

3. Verfahren nach einem der Patentansprüche 1 oder 2, **dadurch gekennzeichnet, dass** es außerdem auf den Sicherungsschritt (i) folgend nacheinander umfasst:
- einen Schritt des Überganges (j) von der genannten mindestens ersten Schrittfolge zu einer zweiten Schrittfolge, wenn eine erste festgelegte Anzahl von in der Tabelle gesicherten Daten, die jeweils aufeinanderfolgend einem ersten Befehl (C1) entsprechen, erreicht ist, wobei der Übergangsschritt (j) mit Hilfe des genannten Steuermittels erfolgt, wobei die genannte zweite Schrittfolge umfasst:
- einen Schritt (j1), der den Schritt der Detektion (a) einer Änderung des Zustandes des genannten ersten Schaltkreises (12) vom offenen Zustand (O) in den geschlossenen Zustand (F) wiederholt, wobei dieser Schritt mit Hilfe des genannten Detektionsmittels erfolgt,
- einen Schritt (j2), der den Schritt der Erzeugung (b) eines ersten Befehls (C1) wiederholt, wobei dieser Schritt mit Hilfe des genannten Steuermittels erfolgt,
- einen Schritt (j3), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt.

4. Verfahren nach einem der Patentansprüche 1 oder 2, **dadurch gekennzeichnet, dass** es außerdem auf den Sicherungsschritt (i) folgend nacheinander umfasst:
- einen Schritt des Überganges (k) von der genannten mindestens ersten Schrittfolge zu einer dritten Schrittfolge, wenn eine zweite festgelegte Anzahl von in der Tabelle gesicherten Daten, die einer aufeinanderfolgenden Kombination aus erstem Befehl (C1) und zweitem Befehl (C2) entsprechen, erreicht ist, wobei der Übergangsschritt (k) mit Hilfe des Steuermittels erfolgt, wobei die genannte dritte Schrittfolge umfasst:
- einen Schritt (k1), der den Schritt der Detektion (a) einer Änderung des Zustandes des genannten ersten Schaltkreises (12) vom offenen Zustand (O) in den geschlossenen Zustand (F) wiederholt
- einen Schritt (k2), der den Schritt der Erzeugung (b) eines ersten Befehls (C1) wiederholt, wobei dieser Schritt mit Hilfe des genannten Steuermittels erfolgt,
- einen Schritt (k3), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt,
- einen Schritt (k4), der den Schritt der Zeitmessung (d) einer veränderlichen Dauer (T0), während derer der genannte erste Schaltkreis (12) im geschlossenen Zustand (F) ist, wiederholt, wobei dieser Schritt mit Hilfe des genannten Steuermittels erfolgt,
- einen Schritt (k5) der Detektion einer Änderung des Zustandes des genannten ersten Schaltkreises (12) vom geschlossenen Zustand (F) in den offenen Zustand (O), wobei dieser Schritt mit Hilfe des genannten Detektionsmittels erfolgt,
- einen Schritt der Erzeugung (k6) eines zweiten Befehls (C2), wobei dieser Schritt mit Hilfe des genannten Steuermittels erfolgt,
- einen Schritt (k7), der den Schritt der Sendung (g) des zweiten Befehls (C2) von der Sendevorrichtung (11) zur Empfangsvorrichtung (15) wiederholt, wobei dieser Schritt mit Hilfe des genannten Sendemittels erfolgt.

5. Verfahren nach irgendeinem der Patentansprüche 1, 2 oder 4, **dadurch gekennzeichnet, dass** es außerdem auf den Sicherungsschritt (i) folgend nacheinander umfasst:
- einen Schritt der Zählung (I) einer ersten Anzahl von Daten, die der Anzahl an ersten in der Tabelle gesicherten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt, wenn eine dritte festgelegte Anzahl in der Tabelle gesicherter Daten erreicht ist,
- einen Schritt der Zählung (m) einer zweiten Anzahl von Daten, die der Anzahl an ersten in der Tabelle gesicherten Befehlen (C1) entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (n) der genannten ersten Anzahl mit der genannten zweiten Anzahl, wobei dieser Schritt mit Hilfe des genannten Steuermittels erfolgt,
- einen Schritt des Überganges (o) von der genannten mindestens einen ersten Schrittfolge zu einer zweiten Schrittfolge, wenn die genannte erste Anzahl echt größer ist, als das Doppelte der genannten zweiten Anzahl, wobei dieser Schritt mit Hilfe des Steuermittels erfolgt, wobei die genannte zweite Schrittfolge umfasst:
- einen Schritt (o1), der den Schritt der Detektion (a) einer Änderung des Zustandes des genannten ersten Schaltkreises (12) vom offenen Zustand (O) in den geschlossenen Zustand (F) wiederholt, wobei dieser Schritt mit Hilfe des genannten Detektionsmittels erfolgt,
- einen Schritt (o2), der den Schritt der Erzeugung (b) eines ersten Befehls (C1) wiederholt, wobei dieser Schritt mit Hilfe des genannten Steuermittels erfolgt,
- einen Schritt (o3), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt.

6. Verfahren nach irgendeinem der Patentansprüche 1 bis 3, **dadurch gekennzeichnet, dass** es außerdem auf den Sicherungsschritt (i) folgend nacheinander umfasst:
- einen Schritt der Zählung (p) einer ersten Anzahl von Daten, die der Anzahl an in der Tabelle gesicherten ersten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt, wenn eine dritte festgelegte Anzahl in der Tabelle gesicherter Daten erreicht ist,
- einen Schritt der Zählung (q) einer zweiten Anzahl von Daten, die der Anzahl an in der Tabelle gesicherten Befehlen der ersten Art entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (r) der genannten ersten Anzahl mit der genannten zweiten Anzahl, wobei dieser Schritt mit Hilfe des genannten Steuermittels erfolgt,
- einen Schritt des Überganges (s) von der genannten mindestens einen ersten Schrittfolge zu einer dritten Schrittfolge, wenn das Doppelte der genannten zweiten Anzahl echt größer ist, als die erste Anzahl, wobei dieser Schritt mit Hilfe des Steuermittels erfolgt, wobei die genannte dritte Schrittfolge umfasst:
- einen Schritt (s1), der den Schritt der Detektion (a) einer Änderung des Zustandes des genannten ersten Schaltkreises (12) vom offenen Zustand (O) in den geschlossenen Zustand (F) wiederholt, wobei dieser Schritt mit Hilfe des genannten Detektionsmittels erfolgt,
- einen Schritt (s2), der den Schritt der Erzeugung (b) eines ersten Befehls (C1) wiederholt, wobei dieser Schritt mit Hilfe des genannten Steuermittels erfolgt,
- einen Schritt (s3), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt,
- einen Schritt (s4), der den Schritt der Zeitmessung (d) einer veränderlichen Dauer (T0), während derer der genannte erste Schaltkreis (12) im geschlossenen Zustand (F) ist, wiederholt, wobei dieser Schritt mit Hilfe des genannten Steuermittels erfolgt,
- einen Schritt der Detektion (s5) einer Änderung des genannten ersten Schaltkreises (12) vom geschlossenen Zustand (F) in den offenen Zustand (O), wobei dieser Schritt mit Hilfe des genannten Detektionsmittels erfolgt,
- einen Schritt der Erzeugung (s6) eines zweiten Befehls (C2), wobei dieser Schritt mit Hilfe des genannten Steuermittels erfolgt,
- einen Schritt (s7), der den Schritt der Sendung (g) des zweiten Befehls (C2) von der Sendevorrichtung (11) zur Empfangsvorrichtung (15) wiederholt, wobei dieser Schritt mit Hilfe des genannten Sendemittels erfolgt.

7. Verfahren nach irgendeinem der Patentansprüche 1 bis 6, **dadurch gekennzeichnet, dass** es außerdem auf den Sicherungsschritt (i) folgend nacheinander umfasst:
- einen Schritt der Zählung (t) einer ersten Anzahl von Daten, die der Anzahl an in der Tabelle gesicherten ersten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt, wenn eine dritte festgelegte Anzahl in der Tabelle gesicherter Daten erreicht ist,
- einen Schritt der Zählung (u) einer zweiten Anzahl von Daten, die der Anzahl an in der Tabelle gesicherten ersten Befehlen (C1) entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (v) der genannten ersten Anzahl mit der genannten zweiten Anzahl, wobei dieser Schritt mit Hilfe des genannten Steuermittels erfolgt,
- einen Schritt des Überganges (w) von der genannten mindestens ersten Schrittfolge zu einer vierten Schrittfolge, wenn die erste Anzahl echt größer ist, als das Doppelte der genannten zweiten Anzahl, wobei dieser Schritt mit Hilfe des genannten Steuermittels erfolgt, wobei die genannte vierte Schrittfolge umfasst:
- einen Schritt (w1), der den Schritt der Detektion (a) einer Änderung des Zustandes des genannten ersten Schaltkreises (12) vom offenen Zustand (O) in den geschlossenen Zustand (F) wiederholt, wobei dieser Schritt mit Hilfe des genannten Detektionsmittels erfolgt,
- einen Schritt (w2), der den Schritt der Erzeugung (b) eines ersten Befehls (C1) wiederholt, wobei dieser Schritt mit Hilfe des genannten Steuermittels erfolgt,
- einen Schritt (w3), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt,
- einen Schritt (w4), der den Schritt der Zeitmessung (d) einer veränderlichen Dauer (T0), während derer der genannte erste Schaltkreis (12) im geschlossenen Zustand (F) ist, wiederholt, wobei dieser Schritt mit Hilfe des genannten Steuermittels erfolgt,
- einen Schritt (w5), der den Schritt des Vergleichs (e) der genannten veränderlichen Dauer (T0) mit einer festgesetzten festen Dauer (T1) wiederholt, wobei dieser Schritt mit Hilfe des genannten Steuermittels erfolgt,
- einen Schritt (w6), der den Schritt der Erzeugung (f) eines zweiten Befehls (C2), wenn die veränderliche Dauer (T0) größer oder gleich der genannten festgesetzten festen Dauer (T1) ist und wenn eine Änderung des Zustandes des genannten ersten Schaltkreises (12) vom geschlossenen Zustand (F) in den offenen Zustand (O) festgestellt wurde, wiederholt, wobei dieser Schritt mit Hilfe des genannten Steuermittels erfolgt,
- einen Schritt der Zählung (w7) einer ersten Anzahl von Daten, die der Anzahl an in der Tabelle gesicherten ersten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt,
- einen Schritt der Zählung (w8) einer zweiten Anzahl von Daten, die der Anzahl an in der Tabelle gesicherten ersten Befehlen (C1) entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (w9) der genannten ersten Anzahl mit der genannten zweiten Anzahl, wobei dieser Schritt mit Hilfe des genannten Steuermittels erfolgt,
- einen Schritt des Überganges (w10) von der genannten vierten Schrittfolge zu einer fünften Schrittfolge, wenn das Doppelte der genannten zweiten Anzahl echt größer ist, als die erste Anzahl, wobei dieser Schritt mit Hilfe des genannten Steuermittels erfolgt, wobei die genannte fünfte Schrittfolge umfasst:
- einen Schritt (A), der den Schritt der Detektion (a) einer Änderung des Zustandes des genannten ersten Schaltkreises (12) vom offenen Zustand (O) in den geschlossenen Zustand (F) wiederholt, wobei dieser Schritt mit Hilfe des genannten Detektionsmittels erfolgt,
- einen Schritt (B), der den Schritt der Erzeugung (b) eines ersten Befehls (C1) wiederholt, wobei dieser Schritt mit Hilfe des genannten Steuermittels erfolgt,
- einen Schritt (C), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt,
- einen Schritt (D), der den Schritt der Zeitmessung (d) einer veränderlichen Dauer (T0), während derer der genannte erste Schaltkreis (12) im geschlossenen Zustand (F) ist, wiederholt, wobei dieser Schritt mit Hilfe des genannten Steuermittels erfolgt,
- einen Schritt (E), der den Schritt des Vergleichs (e) der genannten veränderlichen Dauer (T0) mit einer festgesetzten festen Dauer (T1) wiederholt, wobei dieser Schritt mit Hilfe des genannten Steuermittels erfolgt,
- einen Schritt (F), der den Schritt der Erzeugung (f) eines zweiten Befehls (C2), wenn die veränderliche Dauer (T0) größer oder gleich der genannten festgesetzten festen Dauer (T1) ist und wenn eine Änderung des Zustandes des genannten ersten Schaltkreises (12) vom geschlossenen Zustand (F) in den offenen Zustand (O) festgestellt wurde, wiederholt, wobei dieser Schritt mit Hilfe des genannten Steuermittels erfolgt,
- einen Schritt (G), der den Schritt der Sendung (g) des zweiten Befehls (C2) von der Sendevorrichtung (11) zur Empfangsvorrichtung (15) wiederholt, wobei dieser Schritt mit Hilfe des genannten Sendemittels erfolgt,
- einen Schritt der Zählung (H) einer ersten Anzahl von Daten, die der Anzahl an in der Tabelle gesicherten ersten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt,
- einen Schritt der Zählung (I) einer zweiten Anzahl von Daten, die der Anzahl an in der Tabelle gesicherten Befehlen der ersten Art entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (J) der genannten ersten Anzahl mit der genannten zweiten Anzahl, wobei dieser Schritt mit Hilfe des genannten Steuermittels erfolgt,
- einen Schritt (K), der zum Schritt des Überganges (w) zurücckehrt, wenn die Sendevorrichtung mehr Arbeitszyklen eines monostabilen Schalters (13), als Arbeitszyklen eines bistabilen Schalters (14) festgestellt hat, wobei dieser Schritt mit Hilfe des genannten Steuermittels erfolgt.

8. Verfahren nach irgendeinem der Patentansprüche 1 bis 6, **dadurch gekennzeichnet, dass** es außerdem auf den Sicherungsschritt (i) folgend nacheinander umfasst:
- einen Schritt der Zählung (x) einer ersten Anzahl von Daten, die der Anzahl an in der Tabelle gesicherten ersten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt, wenn eine dritte festgelegte Anzahl in der Tabelle gesicherter Daten erreicht ist,
- einen Schritt der Zählung (y) einer zweiten Anzahl von Daten, die der Anzahl an in der Tabelle gesicherten ersten Befehlen (C1) entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (z) der genannten ersten Anzahl mit der genannten zweiten Anzahl, wobei dieser Schritt mit Hilfe des genannten Steuermittels erfolgt,
- einen Schritt des Überganges (aa) von der genannten mindestens einen ersten Schrittfolge zu einer fünften Schrittfolge, wenn das Doppelte der genannten zweiten Anzahl echt größer ist, als die erste Anzahl, wobei dieser Schritt mit Hilfe des genannten Steuermittels erfolgt, wobei die genannte fünfte Schrittfolge umfasst:
- einen Schritt (aa1), der den Schritt der Detektion (a) einer Änderung des Zustandes des genannten ersten Schaltkreises (12) vom offenen Zustand (O) in den geschlossenen Zustand (F) wiederholt, wobei dieser Schritt mit Hilfe des genannten Detektionsmittels erfolgt,
- einen Schritt (aa2), der den Schritt der Erzeugung (b) eines ersten Befehls (C1) wiederholt, wobei dieser Schritt mit Hilfe des genannten Steuermittels erfolgt,
- einen Schritt (aa3), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt,
- einen Schritt (aa4), der den Schritt der Zeitmessung (d) einer veränderlichen Dauer (T0), während derer der genannte erste Schaltkreis (12) im geschlossenen Zustand (F) ist, wiederholt, wobei dieser Schritt mit Hilfe des genannten Steuermittels erfolgt,
- einen Schritt (aa5), der den Schritt des Vergleichs (e) der genannten veränderlichen Dauer (T0) mit einer festgesetzten festen Dauer (T1) wiederholt, wobei dieser Schritt mit Hilfe des genannten Steuermittels erfolgt,
- einen Schritt (aa6), der den Schritt der Erzeugung (f) eines zweiten Befehls (C2), wenn die veränderliche Dauer (T0) größer oder gleich der genannten festgesetzten festen Dauer (T1) ist und wenn eine Änderung des Zustandes des genannten ersten Schaltkreises (12) vom geschlossenen Zustand (F) in den offenen Zustand (O) festgestellt wurde, wiederholt, wobei dieser Schritt mit Hilfe des genannten Steuermittels erfolgt,
- einen Schritt (aa7), der den Schritt der Sendung (g) des zweiten Befehls (C2) von der Sendevorrichtung (11) zur Empfangsvorrichtung (15) wiederholt, wobei dieser Schritt mit Hilfe des genannten Sendemittels erfolgt,
- einen Schritt der Zählung (aa8) einer ersten Anzahl von Daten, die der Anzahl an in der Tabelle gesicherten ersten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt,
- einen Schritt der Zählung (aa9) einer zweiten Anzahl von Daten, die der Anzahl an in der Tabelle gesicherten ersten Befehlen (C1) entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (aa10) der genannten ersten Anzahl mit der genannten zweiten Anzahl, wobei dieser Schritt mit Hilfe des genannten Steuermittels erfolgt,
- einen Schritt des Überganges (aa11) von der genannten fünften Schrittfolge zu einer vierten Schrittfolge, wenn die genannte erste Anzahl echt größer ist, als das Doppelte der genannten zweiten Anzahl, wobei dieser Schritt mit Hilfe des genannten Steuermittels erfolgt, wobei die genannte vierte Schrittfolge umfasst:
- einen Schritt (A1), der den Schritt der Detektion (a) einer Änderung des Zustandes des genannten ersten Schaltkreises (12) vom offenen Zustand (O) in den geschlossenen Zustand (F) wiederholt, wobei dieser Schritt mit Hilfe des genannten Detektionsmittels erfolgt,
- einen Schritt (B1), der den Schritt der Erzeugung (b) eines ersten Befehls (C1) wiederholt, wobei dieser Schritt mit Hilfe des genannten Steuermittels erfolgt,
- einen Schritt (C1), der den Schritt der Sendung (c) des ersten Befehls (C1) von der Sendevorrichtung (11) zur Empfangsvorrichtung (15) wiederholt, wobei dieser Schritt mit Hilfe des genannten Sendemittels erfolgt,
- einen Schritt (D1), der den Schritt der Zeitmessung (d) einer veränderlichen Dauer (T0), während derer der genannte erste Schaltkreis (12) im geschlossenen Zustand (F) ist, wiederholt, wobei dieser Schritt mit Hilfe des genannten Steuermittels erfolgt,
- einen Schritt (E1), der den Schritt des Vergleichs (e) der genannten veränderlichen Dauer (T0) mit einer festgesetzten festen Dauer (T1) wiederholt, wobei dieser Schritt mit Hilfe des genannten Steuermittels erfolgt,
- einen Schritt (F1), der den Schritt der Erzeugung (f) eines zweiten Befehls (C2), wenn die veränderliche Dauer (T0) größer oder gleich der genannten festgesetzten festen Dauer (T1) ist und wenn eine Änderung des Zustandes des genannten ersten Schaltkreises (12) vom geschlossenen Zustand (F) in den offenen Zustand (O) festgestellt wurde, wiederholt, wobei dieser Schritt mit Hilfe des genannten Steuermittels erfolgt,
- einen Schritt der Zählung (G1), einer ersten Anzahl von Daten, die der Anzahl an in der Tabelle gesicherten ersten Befehlen (C1) entspricht, denen auf jeden ersten Befehl (C1) in der Tabelle ein anderer erster Befehl (C1) folgt, und des Inkrementierens der genannten ersten Anzahl um eine Zahl gleich 1, wenn die genannte erste Anzahl ungerade ist, wobei dieser Schritt mit Hilfe des genannten Steuermittels erfolgt,
- einen Schritt der Zählung (H1) einer zweiten Anzahl von Daten, die der Anzahl an in der Tabelle gesicherten ersten Befehlen (C1) entspricht, denen auf jeden ersten Befehl (C1) in der Tabelle ein zweiter Befehl (C2) folgt, wobei dieser Schritt mit Hilfe des genannten Steuermittels erfolgt,
- einen Schritt des Vergleichs (l1) der genannten ersten Anzahl mit der genannten zweiten Anzahl, wobei dieser Schritt mit Hilfe des genannten Steuermittels erfolgt,
- einen Schritt (J1), der zum Schritt des Überganges (aa) von der genannten vierten Schrittfolge zur genannten fünften Schrittfolge zurückkehrt, wenn die Sendevorrichtung (11) mehr Arbeitszyklen eines bistabilen Schalters (14) als Arbeitszyklen eines monostabilen Schalters (13) festgestellt hat, wobei dieser Schritt mit Hilfe des genannten Steuermittels erfolgt.

9. Verfahren nach irgendeinem der Patentansprüche 1 bis 8, **dadurch gekennzeichnet, dass** es außerdem nacheinander umfasst:
- einen Schritt der Löschung (bb) der Datentabelle und/oder der Daten der Datentabelle mit Hilfe eines Reinitialisierungsmittels der genannten Sendevorrichtung (11),
- einen Schritt des Überganges (cc) von irgendeiner der mindestens ersten, zweiten, dritten, vierten oder fünften Schrittfolge zur mindestens ersten Schrittfolge mit Hilfe des Steuermittels.

10. Verfahren nach irgendeinem der Patentansprüche 1 bis 9, **dadurch gekennzeichnet, dass** es außerdem nach mindestens einem der Schritte (c, g) der Sendung des ersten Befehls (C1) oder des zweiten Befehls (C2) umfasst:
- einen Schritt des Empfangs des ersten Befehls (C1) und/oder des zweiten Befehls (C2), wobei dieser Schritt mit Hilfe eines Empfangsmittels der genannten Empfangsvorrichtung (15) erfolgt,
- einen Schritt der Änderung des Zustandes des zweiten Schaltkreises (16) von einem geschlossenen in einen offenen Zustand oder aus einem offenen in einen geschlossenen Zustand, wobei dieser Schritt von der genannten Empfangsvorrichtung (15) aus erfolgt.

11. Verfahren nach irgendeinem der Patentansprüche 1 bis 10, **dadurch gekennzeichnet, dass** es außerdem umfasst:
- einen Schritt der Sendung einer Information in einem festgelegten Zeitintervall, die dem offenen oder geschlossenen Zustand des zweiten Schaltkreises (16) entspricht, wobei dieser Schritt mit Hilfe eines Sendemittels der genannten Empfangsvorrichtung (15) erfolgt.

12. Sendevorrichtung (11) zur Ausführung des Verfahrens nach mindestens irgendeinem der Patentansprüche 1 bis 9, umfassend:
- ein Stromversorgungsmittel, geeignet, an eine Stromquelle elektrisch angeschlossen zu werden,
- ein Anschlussmittel, geeignet, mit einem ersten Stromkreis (12) elektrisch in Reihe geschaltet zu werden, der einen monostabilen Schalter (13) oder einen bistabilen Schalter (14) umfasst, der geeignet ist, den Zustand des genannten ersten Schaltkreises (12) aus einem offenen Zustand (O) in einen geschlossenen Zustand (F) und umgekehrt zu ändern,
- ein Sendemittel, geeignet, einen ersten Befehl (C1) und einen zweiten Befehl (C2) von der Sendevorrichtung (11) zur Empfangsvorrichtung (15) zu senden,
**dadurch gekennzeichnet, dass** die genannte Sendevorrichtung (11) außerdem umfasst:
- ein Detektionsmittel, geeignet, den offenen und/oder geschlossenen Zustand des genannten ersten Schaltkreises (12) festzustellen,
- ein Steuermittel, geeignet, die in den Patentansprüchen 1 bis 9 definierten und mit diesem genannten Steuermittel verbundenen Schritte auszuführen,
- wobei die genannte Sendevorrichtung (11) außerdem ein Speichermittel aufweist, das erlaubt, eine Datentabelle zu erstellen, um nacheinander in dieser Tabelle bei jeder Erzeugung des genannten ersten Befehls (C1) und bei jeder Erzeugung des genannten zweiten Befehls (C2) eine Information zu speichern, die die Art des erzeugten Befehls kennzeichnet, d.h. entweder der ersten Art oder der zweiten Art.

13. Sendevorrichtung (11) nach Patentanspruch 12, **dadurch gekennzeichnet, dass** sie außerdem ein Reinitialisierungsmittel umfasst, das erlaubt, die Datentabelle und/oder die Daten der Datentabelle zu löschen.

14. Heimautomatisierungsanlage (10) zur Ausführung des Verfahrens nach mindestens irgendeinem der Patentansprüche 10 oder 11, eine Sendevorrichtung (11) nach irgendeinem der Patentansprüche 12 oder 13 umfassend, **dadurch gekennzeichnet, dass** sie außerdem eine Empfangsvorrichtung (12) umfasst, die mit einem Empfangsmittel versehen ist, um eine von der Empfangsvorrichtung (15) gesendete Information zu empfangen, wobei die genannte Information dem offenen oder geschlossenen Zustand des zweiten Schaltkreises (16) entspricht.

## Claims

1. Method for controlling a home automation installation (10) comprising:
- at least a transmitter device (11) comprising:
- a detection means,
- a control means,
- a transmission means,
said transmitter device (11) being able to be connected electrically in series to a first electric circuit (12) comprising a monostable switch (13) or a bistable switch (14), which make it possible to change the state of said first circuit (12) from an open state (O) to a closed state (F) and vice versa,
said transmitter device (11) being able to function in a first chain of steps and being able to detect the change of state of said first circuit (12) from the open state (O) to the closed state (F) and vice versa,
- at least one receiver device (15) able to be connected electrically in series by a connecting means to a second electric circuit (16) comprising at least a one electric consumer unit,
the method comprising at least one first chain of steps comprising:
- a step of detecting (a) a change from the open state (O) to the closed state (F) of said first circuit (12), this step being performed by said detection means;
- a step of generating (b) a first command (C1) of a first type, this step being performed by said control means;
- a step of transmitting (c) the first command (C1) from the transmitter device (11) to the receiver device (15), this step being performed by said transmission means;
the method being **characterised in that** the first chain of steps also comprises:
- a step of measuring (d) in time a period of variable duration (T0), during which said first circuit (12) is in its closed state (F), this step being performed by said control means;
- a step of comparing (e) said variable duration (T0) with a predetermined fixed duration (T1), this step being performed by said control means;
- a step of generating (f) a second command (C2) of a second type when the variable duration (T0) is greater than or equal to said predetermined fixed duration (T1) and when a change from the closed state (F) to the open state (O) of said first circuit (12) is detected, this step being performed by said control means;
- a step of transmitting (g) the second command (C2) from the transmitter device (11) to the receiver device (15), this step being performed by means of said transmission means;
- a step of creating (h) a table of data in a memory, this step being performed by means of a memory unit of said transmitter device (11) prior to the detection step (a) and;
- a step of saving (i) successively in the table, for each generation of said first command (C1) and for each generation of said second command (C2), a piece of data characterising the type of command generated, i.e. either of the first type or of the second type, this step being performed by means of said memory unit.

2. Method according to claim 1, **characterised in that**:
- in the step of transmission (c) of the first command:
- the first command (C1) is transmitted via a radiofrequency signal; and/or
- in the step of transmission (g) of the second command:
- the second command (C2) is transmitted via a radiofrequency signal.

3. Method according to any of claims 1 or 2, **characterised in that** it also comprises, following the saving step (i), in succession:
- a step of passing (j) from said at least first chain of steps to a second chain of steps when a first predetermined number of data saved in the table, each corresponding in succession to a first command (C1), has been reached, the step of passing (j) being performed by the control means, said second chain of steps comprising:
- a step (j1) of repeating the step of detecting (a) a change from the open state (O) to the closed state (F) of said first circuit (12), this step being performed by means of said detection means;
- a step (j2) repeating the step of generating (b) a first command (C1), this step being performed by said control means;
- a step (j3) repeating the step of transmitting (c) the first command (C1) from the transmitter device (11) to the receiver device (15), this step being performed by said transmission means.

4. Method according to any of claims 1 or 2, **characterised in that** it also comprises, following the saving step (i), in succession:
- a step of passing (k) from said at least first chain of steps to a third chain of steps when a second predetermined number of data saved in the table, corresponding to a successive combination of the first command (C1) and of the second command (C2), has been reached, the step of passing (k) being performed by the control means, said third chain of steps comprising:
- a step (kl) repeating the step of detecting (a) a change from the open state (O) to the closed state (F) of said first circuit (12), this step being performed by means of said detection means;
- a step (k2) repeating the step of generating (b) a first command (C1), this step being performed by said control means;
- a step (k3) repeating the step of transmitting (c) the first command (C1) from the transmitter device (11) to the receiver device (15), this step being performed by means of said transmission means;
- a step (k4) repeating the step of measuring (d) in the period of variable duration (T0) during which the said first circuit (12) is in its closed state (F), this step being performed by said control means;
- a step of detecting (k5) a change from the closed state (F) to the open state (O) of said first circuit (12), this step being performed by said detection means;
- a step of generating (k6) a second command (C2), this step being performed by said control means;
- a step (k7) repeating the step of transmitting (g) the second command (C2) from the transmitter device (11) to the receiver device (15), this step being performed by said transmission means.

5. Method according to any of claims 1, 2 or 4, **characterised in that** it also comprises, following the saving step (i), in succession:
- a step of counting (1) a first number of data corresponding to the number of first commands (C1) saved in the table, another first command (C1) following each first command (C1) in the table, and of incrementing said first number by a number equal to one when said first number is odd, this step is performed by said control means when a third predetermined number of data saved in the table has been reached;
- a step of counting (m) a second number of data corresponding to the number of first commands (C1) saved in the table, a second command (C2) following each first command (C1) in the table, this step being performed by said control means;
- a step of comparing (n) said first number to said second number, this step being performed by said control means;
- a step of passing (o) from said at least first chain of steps to a second chain of steps when the said first number is strictly greater than twice said second number, the step of passing (o) being performed by the control means, said second chain of steps comprising:
- a step (o1) repeating the step of detecting (a) a change from the open state (O) to the closed state (F) of said first circuit (12), this step being performed by said detection means;
- a step (o2) repeating the step of generating (b) a first command (C1), this step being performed by said control means;
- a step (o3) repeating the step of transmitting (c) the first command (C1) from the transmitter device (11) to the receiver device (15), this step being performed by means of said transmission means.

6. Method according to any of claims 1 to 3, **characterised in that** it also comprises, following the saving step (i), in succession:
- a step of counting (p) a first number of data corresponding to the number of first commands (C1) saved in the table, another first command (C1) following each first command (C1) in the table, and of incrementing said first number by a number equal to one when said first number is odd, this step is performed by said control means when a third predetermined number of data saved in the table has been reached;
- a step of counting (q) a second number of data corresponding to the number of first commands of the first type saved in the table, a second command (C2) following each first command (C1) in the table, this step being performed by said control means;
- a step of comparing (r) said first number to said second number, this step being performed by said control means;
- a step of passing (s) from said at least first chain of steps to a third chain of steps when the double of said second number is strictly greater than said first number, this step being performed by the control means, said third chain of steps comprising:
- a step (si) repeating the step of detecting (a) a change from the open state (O) to the closed state (F) of said first circuit (12), this step being performed by said detection means;
- a step (s2) repeating the step of generating (b) a first command (C1), this step being performed by said control means;
- a step (s3) repeating the step of transmitting (c) the first command (C1) from the transmitter device (11) to the receiver device (15), this step being performed by said transmission means;
- a step (s4) repeating the step of measuring (d) in the period of variable duration (T0) during which said first circuit (12) is in its closed state (F), this step being performed by said control means;
- a step of detecting (s5) a change from the closed state (F) to the open state (O) of said first circuit (12), this step being performed by said detection means;
- a step of generating (s6) a second command (C2), this step being performed by said control means;
- a step (s7) repeating the step of transmitting (g) the second command (C2) from the transmitter device (11) to the receiver device (15), this step being performed by said transmission means.

7. Method according to any of claims 1 to 6, **characterised in that** it also comprises, following the saving step (i), in succession:
- a step of counting (t) a first number of data corresponding to the number of first commands (C1) saved in the table, another first command (C1) following each first command (C1) in the table, and incrementing said first number by a number equal to one when said first number is odd, this step is performed by said control means when a third predetermined number of data saved in the table has been reached;
- a step of counting (u) a second number of data corresponding to the number of first commands (C1) saved in the table, a second command (C2) following each first command (C1) in the table, this step being performed by said control means;
- a step of comparing (v) said first number with said second number, this step being performed by said control means;
- a step of passing (w) from said at least first chain of steps to a fourth chain of steps when said first number is strictly greater than twice said second number, this step being performed by the control means, said fourth chain of steps comprising:
- a step (w1) repeating the step of detecting (a) a change from the open state (O) to the closed state (F) of said first circuit (12), this step being performed by said detection means;
- a step (w2) repeating the step of generating (b) a first command (C1), this step being performed by said control means;
- a step (w3) repeating the step of transmitting (c) the first command (C1) from the transmitter device (11) to the receiver device (15), this step being performed by said transmission means;
- a step (w4) repeating the step of measuring (d) in the period of variable duration (T0) during which said first circuit (12) is in its closed state (F), this step being performed by said control means;
- a step (w5) repeating the step of comparing (e) said variable duration (T0) to a predetermined fixed period (T1), this step being performed by said control means;
- a step (w6) repeating the step of generating (f) a second command (C2) when the variable duration (T0) is greater than or equal to said predetermined fixed duration (T1) and when a change from the closed state (F) to the open state (O) of said first circuit (12) has been detected, this step being performed by said control means;
- a step of counting (w7) a first number of data corresponding to the number of first commands (C1) saved in the table, another first command (C1) following each first command (C1) in the table, and of incrementing said first number by a number equal to one when the said first number is odd, this step being performed by said control means;
- a step of counting (w8) a second number of data corresponding to the number of first commands (C1) saved in the table, a second command (C2) following each first command (C1) in the table, this step being performed by said control means;
- a step of comparing (w9) said first number to said second number, this step being performed by said control means;
- a step of passing (w10) from said fourth chain of steps to a fifth chain of steps when the double of said second number is strictly greater than said first number, this step being performed by the control means, said fifth chain of steps comprising:
- a step (A) repeating the step of detecting (a) a change from the open state (O) to the closed state (F) of said first circuit (12), this step being performed by said detection means;
- a step (B) repeating the step of generating (b) a first command (C1), this step being performed by said control means;
- a step (C) repeating the step of transmitting (c) the first command (C1) from the transmitter device (11) to the receiver device (15), this step being performed by said transmission means;
- a step (D) repeating the step of measuring (d) in the period of variable duration (T0) during which said first circuit (12) is in its closed state (F), this step being performed by said control means;
- a step (E) repeating the step of comparing (e) said variable duration (T0) with a predetermined fixed duration (T1), this step being performed by said control means;
- a step (F) repeating the step of generating (f) a second command (C2) when the variable duration (T0) is greater than or equal to said predetermined fixed period (T1) and when a change from the closed state (F) to the open state (O) of said first circuit (12) has been detected, this step being performed by said control means;
- a step (G) repeating the step of transmitting (g) the second command (C2) from the transmitter device (11) to the receiver device (15), this step being performed by said transmission means;
- a step of counting (H) a first number of data corresponding to the number of first commands (C1) saved in the table, another first command (C1) following each first command (C1) in the table, and incrementing said first number by a number equal to one when the said first number is odd, this step being performed by said control means;
- a step of counting (I) a second number of data corresponding to the number of first commands (C1) saved in the table, a second command (C2) following each first command (C1) in the table, this step being performed by said control means;
- a step of comparing (J) said first number to said second number, this step being performed by said control means;
- a step (K) returning to the step of passing (w), when the transmitter device has identified more cycles of functioning of a monostable switch (13) than cycles of functioning of a bistable switch (14), this step being performed by said control means.

8. Method according to any of claims 1 to 6, **characterised in that** it also comprises, following the saving step (i), in succession:
- a step of counting (x) a first number of data corresponding to the number of first commands (C1) saved in the table, another first command (C1) following each first command (C1) in the table, and of incrementing said first number by a number equal to one when said first number is odd, this step is performed by said control means when a third predetermined number of data saved in the table has been reached;
- a step of counting (y) a second number of data corresponding to the number of first commands of the first type saved in the table, a second command (C2) following each first command (C1) in the table, this step being performed by said control means;
- a step of comparing (z) said first number to said second number, this step being performed by said control means;
- a step of passing (aa) from said at least first chain of steps to a fifth chain of steps when the double of said second number is strictly greater than said first number, this step being performed by means of the control means, said fifth chain of steps comprising:
- a step (aa1) repeating the step of detecting (a) a change from the open state (O) to the closed state (F) of said first circuit (12), this step being performed by said detection means;
- a step (aa2) repeating the step of generating (b) a first command (C1), this step being performed by said control means;
- a step (aa3) repeating the step of transmitting (c) the first command (C1) from the transmitter device (11) to the receiver device (15), this step being performed by said transmission means;
- a step (aa4) repeating the step of measuring (d) in the period of variable duration (T0) during which said first circuit (12) is in its closed state F, this step being performed by said control means;
- a step (aa5) repeating the step of comparing (e) said variable duration (T0) to a predetermined fixed period (T1), this step being performed by said control means;
- a step (aa6) repeating the step of generating (f) a second command (C2) when the variable duration (T0) is greater than or equal to said predetermined fixed period (T1) and when a change from the closed state (F) to the open state (O) of said first circuit (12) has been detected, this step being performed by said control means;
- a step (aa7) repeating the step of transmitting (g) the second command (C2) from the transmitter device (11) to the receiver device (15), this step being performed by said transmission means;
- a step of counting (aa8) a first number of data corresponding to the number of first commands (C1) saved in the table, another first command (C1) following each first command (C1) in the table, and of incrementing said first number by a number equal to one when the said first number is odd, this step being performed by said control means;
- a step of counting (aa9) a second number of data corresponding to the number of first commands (C1), a second command (C2) following each first command (C1) in the table, this step being performed by said control means;
- a step of comparing (aa10) said first number to said second number, this step being performed by said control means;
- a step of passing (aa11) from said fifth chain of steps to a fourth chain of steps when said first number is strictly greater than double said second number, this step being performed by the control means, said fourth chain of steps comprising:
- a step (A1) repeating the step of detecting (a) a change from the open state (O) to the closed state (F) of said first circuit (12), this step being performed by said detection means;
- a step (B1) repeating the step of generating (b) a first command (C1), this step being performed by said control means;
- a step (C1) repeating the step of transmitting (c) the first command (C1) from the transmitter device (11) to the receiver device (15), this step being performed by means of said transmission means;
- a step (D1) repeating the step of measuring (d) in the period of variable duration (T0) during which the said first circuit (12) is in its closed state F, this step being performed by said control means;
- a step (E1) repeating the step of comparing (e) said variable duration (T0) with a predetermined fixed period (T1), this step being performed by said control means;
- a step (F1) repeating the step of generating (f) a second command (C2) when the variable duration (T0) is greater than or equal to said predetermined fixed period (T1) and when a change from the closed state (F) to the open state (O) of said first circuit (12) has been detected, this step being performed by said control means;
- a step of counting (G1) a first number of data corresponding to the number of first commands (C1) saved in the table, another first command (C1) following each first command (C1) in the table, and of incrementing said first number by a number equal to one when the said first number is odd, this step being performed by said control means;
- a step of counting (H1) a second number of data corresponding to the number of first commands (C1) saved in the table, a second command (C2) following each first command (C1) in the table, this step being performed by said control means;
- a step of comparing (I1) said first number to said second number, this step being performed by said control means;
- a step (J1) returning to the step of passing (aa) from said fourth chain of steps to said fifth chain of steps when the transmitter device (11) has identified more cycles of functioning of a bistable switch (14) than cycles of functioning of a monostable switch (13), this step being performed by said control means .

9. Method according to any of claims 1 to 8, **characterised in that** it also comprises, in succession:
- a step of deleting (bb) from the table of data and/or data in the table of data by means of a resetting means of said transmitter device (11);
- a step of passing (cc) from any of the at least first, second, third, fourth of fifth chains of steps to the at least first chain of steps by means of the control means.

10. Method according to any of claims 1 to 9, **characterised in that** it also comprises, following at least one of the transmitting steps (c, g) of the first command (C1) or the second command (C2):
- a step of receiving the first command (C1) and/or the second command (C2), this step being performed by a receiver means of said receiver device (15);
- a step of changing the state of the second circuit (16) from a closed state to an open state or from an open state to a closed state, this step being performed by said receiver device (15).

11. Method according to any of claims 1 to 10, **characterised in that** it also comprises:
- a step of transmitting, in a predetermined interval of time, a piece of information corresponding to the open state or closed state of the second circuit (16), this step being performed by a transmission means of said receiver device (15).

12. Transmitter device (11) for implementing the method according to at least any of claims 1 to 9 comprising:
- a power supply means able to be connected electrically to a power source;
- a connecting means able to be connected electrically in series to a first electric circuit (12) comprising a monostable switch (13) or a bistable switch (14), making it possible to change the state of said first circuit (12) from an open state (O) to a closed state (F) and vice versa;
- a transmission means making it possible to transmit a first command (C1) and a second command (C2) from the transmitter device (11) to the receiver device (15); **characterised in that** said transmitter device (11) also comprises:
- a detection means making it possible to detect the open and/or closed state of said first circuit (12);
- a control means making it possible to perform the steps defined in claims 1 to 9 and associated with said control means;
said transmitter device (11) also comprising a memory, which makes it possible to create a table of data for saving successively in the table, for each generation of said first command (C1) and for each generation of said second command (C2), a piece of data characterising the type of command generated, i.e. either of the first type or of the second type.

13. Transmitter device (11) according to claim 12, **characterised in that** it also comprises a resetting means, which makes it possible to delete the table of data and/or data in the table of data.

14. Home automation installation (10) for implementing the method according to at least any of claims 10 or 11, comprising a transmitter device (11) according to any of claims 12 or 13, **characterised in that** it also comprises a receiver device (12) provided with a receiver means for receiving a piece of information transmitted by the receiver device (15), said information corresponding to the open or closed state of the second circuit (16).
